# EUROPEAN PATENT APPLICATION

(11) **EP 4 811 151 A1**
(43) Date of publication of application: **23.09.2026**
(21) Application number: 25835896.9
(22) Date of filing: 28.05.2025
(51) Int. Cl.: G06F 16/174

(54) **BLOCKCHAIN-BASED BLOCK COMPRESSION METHOD AND APPARATUS, DEVICE, AND READABLE STORAGE MEDIUM**

(30) Priority: 08.07.2024 CN 202410910740
(71) Applicant: Tencent Technology (Shenzhen) Company Limited, Shenzhen, Guangdong 518057 (CN)
(72) Inventor: LU, Guanghong, Shenzhen, Guangdong 518057 (CN); ZHANG, Hongbo, Shenzhen, Guangdong 518057 (CN); WANG, Chunxiang, Shenzhen, Guangdong 518057 (CN); CAI, Zhihong, Shenzhen, Guangdong 518057 (CN)
(74) Representative: Gunzelmann, Rainer
(86) International application number: PCT/CN2025/097787
(87) International publication number: WO 2026/011993

(57) **Abstract**

Provided are a blockchain-based block compression method and apparatus, a device, and a readable storage medium. The method comprises: acquiring M transaction data packets, each of the transaction data packets comprising transaction attribute values of N transaction attribute types; on the basis of the transaction attribute values and type priorities respectively corresponding to the N transaction attribute types, determining a positional order of the M transaction data packets, so as to obtain a transaction data packet sequence; for the N transaction attribute types, on the basis of the transaction attribute values corresponding to the same transaction attribute types in the transaction data packet sequence, respectively generating attribute value sets according to the positional order, so as to obtain N attribute value sets; respectively performing delta encoding processing on the N attribute value sets to obtain N attribute value delta encodings; and performing block encapsulation processing on the N attribute value delta encodings to obtain a block pending for blockchain uploading.

## Description

This application claims priority to Chinese Patent Application No. 2024109107402, entitled "METHOD AND APPARATUS FOR COMPRESSING DATA OF A BLOCKCHAIN, DEVICE, AND READABLE STORAGE MEDIUM" and filed with the China National Intellectual Property Administration on July 08, 2024.

### FIELD OF THE TECHNOLOGY

The present disclosure relates to the technical field of computers, and in particular, to a method and an apparatus for compressing data of a blockchain, a device, and a readable storage medium.

### BACKGROUND OF THE DISCLOSURE

A blockchain is a new application mode of computer technologies such as distributed data storage, peer-to-peer transmission, a consensus mechanism, and an encryption algorithm, and is primarily configured to organize data in chronological order and encrypt the data into a ledger, to make the data tamper-proof and unforgeable and enable data validation, storage, and update.

Because of decentralization and multi-node features of a blockchain system, each blockchain node needs to store a complete copy of data on all blocks. A single block often requires a very large amount of space, and a volume of data stored on each blockchain node in the blockchain system continuously increases over time, resulting in exponentially increasing consumption of storage resources. This in turn continuously lowers data operation performance of the blockchain node, and further lowers performance of the entire blockchain system.

### SUMMARY

Embodiments of the present disclosure provide a method and an apparatus for compressing data of a blockchain and apparatus, a device, and a readable storage medium. Storage space required by a block is reduced and performance of a blockchain system is improved.

According to an aspect, embodiments of the present disclosure provide a method for compressing data of a blockchain. The method comprises: obtaining M pieces of transaction data, where each piece of transaction data comprises N attribute values of N transaction attributes, respectively, and M and N are both positive integers; sorting, according to priorities of the N transaction attributes and the N attribute values of each piece of transaction data, the M pieces of transaction data into a transaction sequence; generating N attribute-value sets, where each attribute-value set comprises the attribute values of a respective one of the N transaction attributes in the M pieces of transaction data, and an order of the attribute values of the respective transaction attribute in each attribute-value set is identical to an order of the attribute values of the respective transaction attribute in the transaction sequence; performing differential encoding on the N attribute-value sets to obtain N attribute codes, respectively; and encapsulating the N attribute codes into a block, where the block is uploaded to the blockchain when the block is finalized through consensus.

According to an aspect, embodiments of the present disclosure provide an apparatus for compressing data of a blockchain. The apparatus comprises: an obtaining module, configured for obtaining M pieces of transaction data, where each piece of transaction data comprises N attribute values of N transaction attributes, respectively, and M and N are both positive integers; a sorting module, configured for sorting, according to priorities of the N transaction attributes and the N attribute values of each piece of transaction data, the M pieces of transaction data into a transaction sequence; a classifying module, configured for generating N attribute-value sets, where each attribute-value set comprises the attribute values of a respective one of the N transaction attributes in the M pieces of transaction data, and an order of the attribute values of the respective transaction attribute in each attribute-value set is identical to an order of the attribute values of the respective transaction attribute in the transaction sequence; a coding module, configured for performing differential encoding on the N attribute-value sets to obtain N attribute codes, respectively; and an encapsulating module, configured for encapsulating the N attribute codes into a block, where the block is uploaded to the blockchain when the block is finalized through consensus.

According to an aspect, embodiments of the present disclosure provide a computer device, including: a processor, a memory, and a network interface.

The processor is connected to the memory and the network interface. The network interface is configured to provide a data communication network element. The memory is configured to store a computer program. The processor is configured to invoke the computer program to perform the method according to the embodiments of the present disclosure.

According to an aspect, embodiments of the present disclosure provide a computer-readable storage medium. The computer-readable storage medium stores a computer program. The computer program, when loaded and executed by a processor, implements the foregoing method.

One aspect of the embodiments of the present disclosure provides a computer program product or a computer program. The computer program product or the computer program includes computer instructions. The computer instructions are stored in a computer readable storage medium. A processor of a computer device reads the computer instructions from the computer readable storage medium. The processor executes the computer instructions to implement the foregoing method.

Herein a blockchain node obtains the M pieces of transaction data, where each piece of transaction data comprises the N attribute values of the N transaction attributes, respectively. The blockchain node sorts the M pieces of transaction data into a transaction sequence according to the priorities of the N transaction attributes and the N attribute values of each piece of transaction data. The blockchain node then generates the N attribute-value sets, where each attribute-value set comprises the attribute values of the respective one of the N transaction attributes in the M pieces of transaction data, and the order of the attribute values of the respective transaction attribute in each attribute-value set is identical to the order of the attribute values of the respective transaction attribute in the transaction sequence. The blockchain node performs the differential encoding on the N attribute-value sets to obtain the N attribute codes, respectively. Afterwards, the blockchain node encapsulates the N attribute codes into the block, where the block is uploaded to the blockchain when the block is finalized through consensus. Herein the pieces of transaction data are first sorted using the priorities of the transaction attributes and the attribute values. The sorting ensures that a group of pieces that have little change in the attribute values is encoded first in the differential encoding, and thus data redundancy can be eliminated more thoroughly in the differential encoding phase. The blocks can occupy less space, and performance of the blockchain system is enhanced.

### BRIEF DESCRIPTION OF THE DRAWINGS

To describe the technical solutions in the embodiments of the present disclosure or in the related art more clearly, the accompanying drawings required for describing the embodiments or the related art are briefly described below. Apparently, the accompanying drawings in the following description show some embodiments of the present disclosure, and a person of ordinary skill in the art may still derive other drawings from these accompanying drawings without creative efforts.
FIG. 1 is a schematic diagram of a network structure of a blockchain node system according to an embodiment of the present disclosure.
FIG. 2 is a schematic diagram of a scenario of a method for compressing data of a blockchain according to an embodiment of the present disclosure.
FIG. 3 is a schematic flowchart of a method for compressing data of a blockchain according to an embodiment of the present disclosure.
FIG. 4 is a schematic diagram of sorting pieces of transaction data according to an embodiment of the present disclosure.
FIG. 5 is a schematic flowchart of a process of determining priorities in a blockchain system according to an embodiment of the present disclosure.
FIG. 6 is a schematic diagram of sliding of a sliding window according to an embodiment of the present disclosure.
FIG. 7 is a schematic diagram of architecture of a system for compressing data of a blockchain through differential encoding using a sliding window and a running standard deviation according to an embodiment of the present disclosure.
FIG. 8a is a schematic diagram of a process of sorting pieces of transaction data using a sliding window and a running standard deviation according to an embodiment of the present disclosure.
FIG. 8b is a schematic structural diagram of a sliding window covering multiple transaction attributes according to an embodiment of the present disclosure.
FIG. 9 is a schematic diagram of a process of compressing data of a blockchain through differential encoding according to an embodiment of the present disclosure.
FIG. 10 is a schematic structural diagram of an apparatus for compressing data of a blockchain according to an embodiment of the present disclosure.
FIG. 11 is a schematic structural diagram of a computer device according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are some of the embodiments of the present disclosure, rather than all of the embodiments. All other embodiments obtained by a person of ordinary skill in the art based on the embodiments of the present disclosure without creative efforts fall within the scope of protection of the present disclosure.

For ease of understanding, some terms are first briefly explained below.
1. Blockchain: In a narrow sense, the blockchain refers to a chained data structure with blocks as fundamental units. In a block, a previously obtained transaction history is validated by using a digital digest, which meets requirements for tamper-proofing and scalability in a distributed ledger scenario. In a broad sense, the blockchain also refers to a distributed ledger technology implemented by the blockchain structure, including distributed consensus, privacy and security protection, a peer-to-peer communication technology, a network protocol, a smart contract, and the like.

An objective of the blockchain is to implement a distributed ledger for recording data, which is append-only and does not permit deletion. A basic underlying structure of the account book is a linear linked list. The linked list is formed by concatenating "blocks" one by one. A succeeding block records a Hash value of a preceding block. Whether each block (and a transaction in the block) is legal may be quickly checked by calculating a Hash value. If a node in a network proposes to add a new block, consensus confirmation on the blocks needs to be reached based on a consensus mechanism.

2. Block: The block refers to a data piece carrying transaction data on a blockchain network and is a data structure marked with a timestamp and a hash value of a preceding block. The block verifies and determines transactions in blocks based on a consensus mechanism of the network. The block includes a block header and a block body. The block header may record metadata of the current block, including data such as a current version number, a hash value corresponding to a preceding block, a timestamp, a random number, and a hash value of a Merkle Root. The block body may record detailed data generated in a period of time, including all transaction records of the current block that are verified and that are generated during creation of the block, or other information, and may be understood as a representation form of a ledger. In addition, the detailed data of the block body may include a hash process of a Merkle tree, which generates a unique Merkle root that is recorded in the block header.

The preceding block is also referred to as a parent block. The blockchain records a hash value corresponding to the block and a hash value corresponding to the parent block in the block header to implement chronological sorting.

3. Hash value: The hash value is alternatively referred to as an information feature value or a feature value. The hash value is generated by converting input data of any length into a cryptographic digest by using a hash algorithm and producing an output of a fixed length. The original input data cannot be retrieved by decrypting the hash value because the hash algorithm is a one-way encryption function. In the blockchain, each block (except for the genesis block) includes a hash value of a preceding block. The hash value is the potential core foundation and the most critical aspect of the blockchain technology, as it preserves authenticity of recorded and viewed data, as well as integrity of the blockchain as a whole.

4. Smart contract: The smart contract refers to a computer protocol that is designed to propagate, verify, or execute a contract in an information-based manner. The concept of the smart contract has three main elements: a promise, a protocol, and a digital form. Therefore, an application range of the blockchain can be extended to various links of transaction, payment, settlement, and clearing in the financial industry. The smart contract is a contract that automatically executes its terms when a pre-programmed condition is triggered, and a working principle of the smart contract is similar to an if-then statement of a computer program. The smart contract allows trustworthy transactions to be performed without a third party, and these transactions are traceable and irreversible.

5. State data: The state data refers to a data structure in a blockchain system that is configured to represent a current state of the system. The state data includes balances of all accounts, a state of a smart contract, and other related information. The state data is continuously updated as a piece of transaction data is executed and reflects a global state of the blockchain system at a time point. In the blockchain system, the state data is typically stored in the form of a Merkle tree or another encrypted data structure, to ensure integrity and security of the state data.

6. Transaction pool: The transaction pool (also referred to as an internal memory pool or mempool) is a data structure in a blockchain network and is configured for storing a pending transaction that is not packaged into a block. When a user submits a new transaction to the blockchain network, the transaction first enters the transaction pool. When preparing to generate a new block, a blockchain node selects a particular quantity of transactions from the transaction pool for packaging. The transaction pool helps improve a processing capability of the blockchain network.

7. Sliding window: The sliding window is a data processing technique configured for creating a dynamic subset in a series of data points. The subset includes data points before and after a current processing point. During processing of a blockchain transaction, the sliding window may be configured for continuously detecting and analyzing recent transaction data. The window "slides" as a new piece of transaction data is added, to be specific, a new transaction (data piece) is added to one end of the window, and an old transaction (data piece) is removed from the other end of the window. This method allows the system to dynamically detect a change in transaction data, to facilitate implementation of various optimization policies, such as transaction sorting or data compression.

8. Running variance: The running variance refers to a measure of a variance (namely, an average of a square of a difference between a data point and an average value of the data points) of data points, and it dynamically changes over time within a temporal window. In blockchain transaction data, the running variance may be configured for measuring a variability of a particular attribute (such as a transaction amount and an address of a transaction party) in a recent period of time. By calculating the running variance, a system may identify an attribute with slight changes (namely, with small variance), and the attribute may be more easily compressed during differential encoding because of high uniformity of the attribute values.

9. Differential encoding (also called incremental encoding or delta encoding): Differential encoding is a data compression technique in which only a change in data points in a data sequence is stored, rather than storing a full value of each data point. In a blockchain transaction, differential encoding may be configured for reducing redundancy of storing same or similar transaction data. For example, if successive transactions come from a same transmitter, when these transactions are stored, an address of the transmitter may be stored only once, and only a tag or a reference value is stored for a subsequent transaction to indicate that its value of the field is actually identical to that of the previous transaction.

10. Block compression: Block compression refers to a process of compressing block data in a blockchain, to reduce space required for storage and transmission. A block typically includes a plurality of transactions, and each transaction includes a plurality of fields. By using a data compression algorithm such as differential encoding, a size of the block can be reduced, storage costs are reduced, and network transmission efficiency is improved. Block compression is crucial for enhancing scalability and performance of the blockchain, especially in a public blockchain network that processes a large quantity of pieces of transaction data.

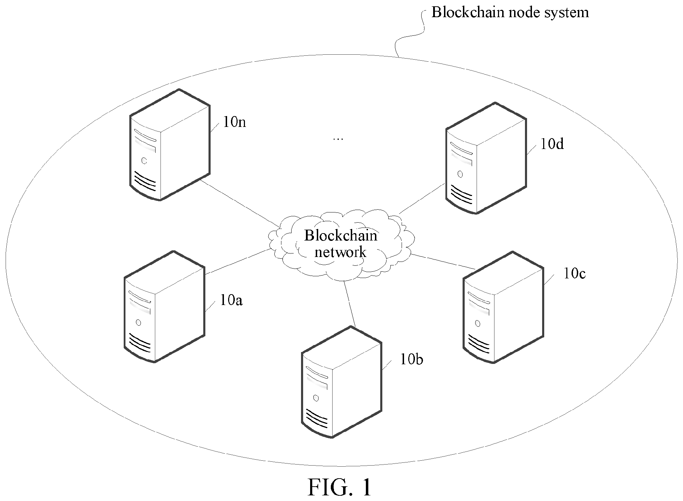

FIG. 1 is a schematic diagram of a network structure of a blockchain node system according to an embodiment of the present disclosure. The blockchain network shown in FIG. 1 may include, but is not limited to, a blockchain network corresponding to a consortium blockchain. The blockchain network may include a plurality of blockchain nodes. The plurality of blockchain nodes may specifically include a blockchain node 10a, a blockchain node 10b, a blockchain node 10c, a blockchain node 10d, ..., and a blockchain node 10n. During normal operation, each blockchain node may receive data transmitted from external sources and add a block to the chain based on the received data or may transmit data to the external sources. To ensure intercommunication of data between the blockchain nodes, a data connection may exist between the blockchain nodes. For example, a data connection exists between the blockchain node 10a and the blockchain node 10b, a data connection exists between the blockchain node 10a and the blockchain node 10c, and a data connection exists between the blockchain node 10b and the blockchain node 10c.

The data connection is not limited to a connection manner and may be implemented directly or indirectly by using a wired communication protocol or implemented directly or indirectly by using a wireless communication protocol, or implemented in another connection manner. This is not limited in the present disclosure.

Data or block transmission may be performed between the blockchain nodes through the data connection. The blockchain network may achieve the data connection between the blockchain nodes based on node identifiers. Each blockchain node in the blockchain network has a corresponding node identifier, and each blockchain node can store a node identifier of another blockchain node connected to the blockchain node. In this way, the blockchain node broadcasts obtained data or a generated block to still another blockchain node based on the node identifier of the another blockchain node subsequently. For example, a node identifier list shown in Table 1 may be maintained in the blockchain node 10a. The node identifier list stores node names and node identifiers of other nodes.

**Table 1**

| Node name | Node identifier |
|---|---|
| Node 10a | AAA.AAA.AAA.AAA |
| Node 10b | BBB.BBB.BBB.BBB |
| Node 10c | CCC.CCC.CCC.CCC |
| Node 10d | DDD.DDD.DDD.DDD |
| ... | ... |
| Node 10n | EEE.EEE.EEE.EEE |

The node identifier may be an Internet protocol (IP) address and any other piece of information capable of identifying the node in the blockchain network. In Table 1, a description is made by using only the IP address as an example. For example, the blockchain node 10a can transmit information (such as a block) to the blockchain node 10b based on the node identifier BBB.BBB.BBB.BBB, and the blockchain node 10b can determine that the information is transmitted by the blockchain node 10a based on the node identifier AAA.AAA.AAA.AAA.

In the blockchain, before being added to the chain, a single block needs to undergo consensus among consensus nodes in the blockchain network and can be added to the blockchain only after consensus is reached. When the blockchain is applied to some scenarios involving government or commercial institutions, not all participating nodes (namely, the blockchain nodes in the blockchain network) in the blockchain have sufficient resources and necessity to become the consensus nodes in the blockchain. For example, in the blockchain network shown in FIG. 1, the blockchain node 10a, the blockchain node 10b, the blockchain node 10c, and the blockchain node 10d may be used as the consensus nodes in the blockchain network. The consensus nodes within the blockchain network participate in consensus, that is, engage in consensus on the block (including a batch of transactions), to be specific, vote on the block. Non-consensus node does not participate in consensus, but helps propagate the block and a vote message, as well as synchronize mutual states, and the like.

A single block often occupies a very large amount of space, and a volume of data stored on each blockchain node within the blockchain system continuously increases over time. Therefore, embodiments of the present disclosure provide a method for compressing data of a blockchain. Pieces of transaction data are sorted, and transactions with slight change in attribute value changes are prioritized in processing and compression. This achieves highly efficient elimination of data redundancy and reduces storage space required for blocks. Specifically, when satisfying a block-generation condition, any blockchain node in the blockchain network may perform following operations. M pieces of transaction data are obtained, where each piece of transaction data comprises N attribute values of N transaction attributes, respectively, and M and N are both positive integers. The M pieces of transaction data are sorted into a transaction sequence sorting, according to priorities of the N transaction attributes and the N attribute values of each piece of transaction data. N attribute-value sets are generated, where each attribute-value set comprises the attribute values of a respective one of the N transaction attributes in the M pieces of transaction data, and an order of the attribute values of the respective transaction attribute in each attribute-value set is identical to an order of the attribute values of the respective transaction attribute in the transaction sequence. Differential encoding is performed on the N attribute-value sets to obtain N attribute codes, respectively. The N attribute codes are encapsulated into a block, where the block is uploaded to the blockchain when the block is finalized through consensus.

The data connection is not limited to a connection manner. It may be implemented directly or indirectly by using a wired communication protocol, implemented directly or indirectly by using a wireless communication protocol, or implemented in another connection manner. This is not limited in the present disclosure.

The block compression method provided in the embodiments of the present disclosure may be performed by a computer device. The computer device includes, but is not limited to, a blockchain node (which may be a terminal or a server). The server may be an independent physical server, or a server cluster or distributed system including a plurality of physical servers, or a cloud server that provides a basic cloud computing service such as a cloud service, a cloud database, cloud computing, a cloud function, cloud storage, a network service, cloud communication, a middleware service, a domain name service, a security service, a content delivery network (CDN), and a big data and artificial intelligence platform. The terminal may be, but is not limited to, a smartphone, a tablet computer, a notebook computer, a desktop computer, a smart speaker, a smartwatch, or the like.

The embodiments of the present disclosure may be applied to various application scenarios, which include, but are not limited to, cloud technologies, artificial intelligence, intelligent driving, supply chain management, Internet of Things (IoT) data storage, cross-platform or cross-region remittance, and the like.

For example, the embodiments of the present disclosure may be applied to supply chain management. In supply chain management, a blockchain is configured for recording each link from production to consumption of a commodity. The information usually includes a large amount of repeated data, such as supplier information and a batch number. The embodiments of the present disclosure may be applied to these systems. Transaction data in a block is compressed, to improve data storage and query efficiency. In addition, this ensures transparency and tamper resistance of a supply chain.

For another example, the embodiments of the present disclosure may be applied to IoT data storage. An IoT device usually generates a large amount of data, and a blockchain may provide a secure storage and sharing platform for the data. The embodiments of the present disclosure may be applied to blockchain storage of IoT data. Similar data frequently exchanged between devices is compressed, to reduce storage demands and improve data transmission efficiency. This is particularly important for IoT applications with limited bandwidth and high demands for real-time data processing.

In a specific implementation of the present disclosure, relevant data, such as transactions and attribute values, are involved. When the embodiments of the present disclosure are applied to a specific product or technology, users' permission or consent needs to be obtained, and collection, use, and processing of the relevant data need to comply with relevant laws, regulations, and standards of relevant countries and regions.

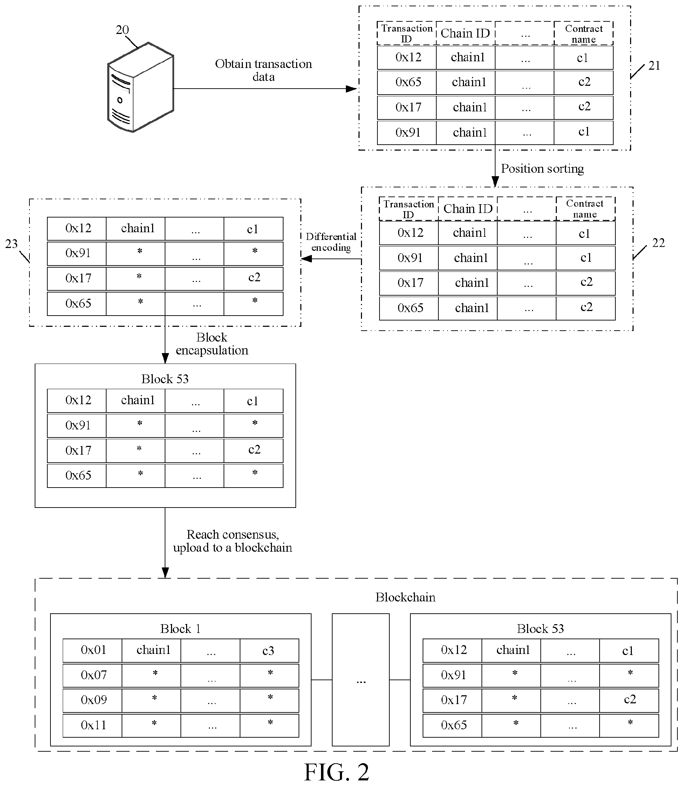

To facilitate understanding of the foregoing block encoding and compression process, FIG. 2 is a schematic diagram of a scenario of a method for compressing data of a blockchain according to an embodiment of the present disclosure. A blockchain node 20 as shown in FIG. 2 may be any blockchain node in the foregoing blockchain network. For example, the blockchain node 20 may be the blockchain node 10a.

As shown in FIG. 2, when the blockchain node 20 satisfies a condition for generating a block, that is, when the blockchain node 20 serves as a block-generation node in a current round, the blockchain node 20 may obtain a packet 21 of transaction data from a transaction pool. It is assumed that the obtained packet 21 of transaction data include data of a transaction 0x12 (namely, a transaction whose transaction ID is 0x12), a transaction 0x65 (namely, a transaction whose transaction ID is 0x65), a transaction 0x17 (namely, a transaction whose transaction ID is 0x17), and a transaction 0x91 (namely, a transaction whose transaction ID is 0x91). A single transaction may include a plurality of attribute values of different transaction attributes. For example, a single transaction may include attribute values of transaction attributes such as a transaction ID, a chain ID, ..., and a contract name. The attribute values of some transaction attributes may repeat in successive transactions. For example, for a chain ID, when only one blockchain exists in the blockchain network, all transactions (or pieces of transaction data) generated in the blockchain network may include the same chain ID, and storing the chain ID of each piece of transaction data repeatedly may cause unnecessary space waste.

Therefore, before encoding and compressing the transactions, the blockchain node 20 may first sort the packet 21 of transaction data according to respective priorities of the transaction attributes and the attribute value of each transaction attribute to obtain a sorted packet 22 (which comprises a transaction sequence of the sorted pieces of transaction data). The priority of the transaction attribute may indicate a variability of the attribute values of the same transaction attribute. A higher priority of the transaction attribute indicates a smaller variability of the attribute values of the transaction attribute. That is, for a transaction attribute having a higher priority, it is more likely to find identical attribute values among multiple transactions.

As shown in FIG. 2, it is assumed that the chain ID has a priority of 1 (the highest priority), the contract name has a priority of 2, ..., and a transaction ID has a priority of n (the lowest priority). When sorting the packet 21 of transaction data, the blockchain node 20 may first sort the transactions in the packet 21 of transaction data based on attribute values of the chain ID to obtain a 1^{st} intermediate candidate sequence, then sort the transactions in the1^{st} intermediate candidate sequence based on attribute values of the contract name to obtain a 2^{nd} intermediate candidate sequence, ..., and finally sort, based on attribute values of the transaction ID, transactions in the (n-1)^{nd} intermediate candidate sequence to obtain the sorted packet 22. When the transactions are sorted based on attribute values of a transaction attribute with a certain priority, a current sequence of the attribute values of each transaction attribute with a higher priority would not change in this sorting. For example, after the transactions in the1^{st} intermediate candidate sequence are sorted based on the attribute values of the contract name, the transactions are in a following order in the 2^{nd} intermediate candidate sequence: the transaction 0x12, the transaction 0x91, the transaction 0x65, and the transaction 0x17. In this case, a current sequence of the attribute values of the contract name in the 2^{nd} intermediate candidate sequence is [c1, c1, c2, c2]. Then, the transactions in the 2^{nd} intermediate candidate are sorted based on the attribute values of the transaction ID, and the transactions are in a following order in the 3^{rd} intermediate candidate sequence: the transaction 0x12, the transaction 0x91, the transaction 0x17, and the transaction 0x65. The sequence of the attribute values of the contract name in the 3^{rd} intermediate candidate sequence is still [c1, c1, c2, c2].

As shown in FIG. 2, after obtaining the sorted packet 22, the blockchain node 20 may perform differential encoding on the sorted packet 22, that is, perform differential encoding on the attribute values of different transaction attributes to obtain attribute codes 23. For example, for the attribute values of the chain ID, the blockchain node 20 performs differential encoding on the attribute values, to obtain the following attribute code of the chain ID: [chain1, *, *, *]. For the attribute values of the contract name, the blockchain node 20 performs differential encoding on the attribute values, to obtain the following attribute code of the contract name: [c1, *, c2, *]. Finally, the blockchain node 20 may perform block encapsulation on the attribute codes 23, to obtain a block 53. Then, the blockchain node 20 may transmit the block 53 to other blockchain node(s) in the blockchain network. After the block 53 reaches consensus, the blockchain node 20 may write the block 53 into the blockchain.

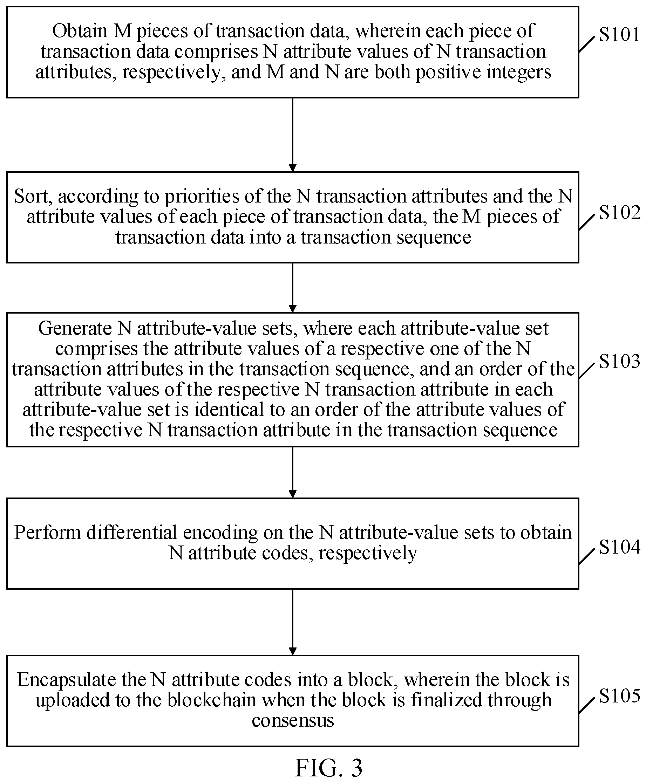

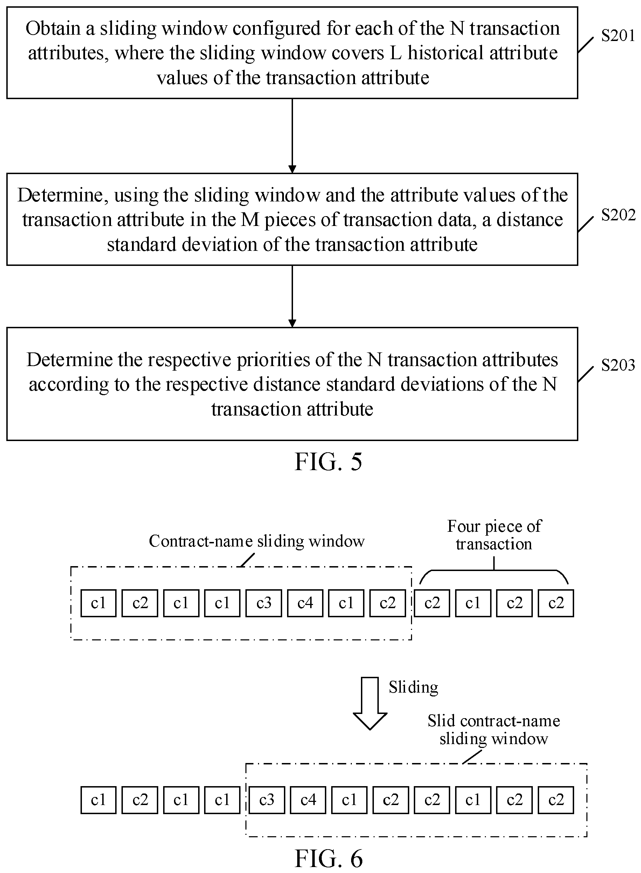

For implementations of the process of performing sorting on the piece of transaction data and the process of performing differential encoding on the pieces of transaction data subjected to sorting, refer to specific descriptions in the following embodiments corresponding to FIG. 3 and FIG. 5.

It may be learned from FIG. 2 that according to the block compression method provided in the embodiments of the present disclosure, the transactions may be resorted based on the priorities corresponding to the transaction attributes and the attribute values of the transaction attributes. Based on such a sorting mechanism, identical attribute values included in the plurality of transactions can be sequenced as close as possible. In this way, high data redundancy elimination efficiency is achieved in the subsequent differential encoding phase, to reduce storage space required for the block and enhance performance of the blockchain system.

Further, FIG. 3 is a schematic flowchart of a method for compressing data of a blockchain according to an embodiment of the present disclosure. The method may be executed by a blockchain node (which is, for example, any blockchain node in the blockchain network in the embodiment as show in FIG. 1, such as the blockchain node 10a). Description is made below by using an example in which the method is performed by a blockchain node. In embodiments of the present disclosure including the embodiments of both the claims and the specification (hereinafter referred to as "all embodiments of the present disclosure"), the method for compressing data of a blockchain may include operation S101 to operation S105.

Operation S101: Obtain M pieces of transaction data, where each piece of transaction data comprises N attribute values of N transaction attributes, respectively, and M and N are both positive integers.

Specifically, a piece of transaction data refers to data of a pending transaction that has not been packaged into a block, and the pending transactions are usually stored in a transaction pool. When a user submits a new transaction to the blockchain network, the transaction first enters the transaction pool. When preparing to generate a new block, a blockchain node selects transaction(s) of a quantity of from the transaction pool for packaging. These transactions serve as the M pieces of transaction data in the present disclosure. M is determined by block settings of a current blockchain. For example, a single block in the current blockchain may include 100 transactions, and hence M may be equal to 100.

To facilitate understanding of a transaction structure of the piece of transaction data, Table 2 provides a feasible example of the transaction structure.

**Table 2**

| Transaction ID | Timestamp | Identity of transaction transmitter | Signature of transaction transmitter | Chain ID | Contract name | Contract method | Contract parameter | Contract read set | Contract write set |
|---|---|---|---|---|---|---|---|---|---|
| 0x12 | 1762541 | Alice | sig1 | chain1 | c1 | set | a, 100 | / | a, 100 |
| 0x65 | 1762551 | Alice | sig2 | chain1 | c1 | set | b, 80 | / | b, 80 |
| 0xa9 | 1762584 | Alice | sig5 | chain1 | c1 | get | a | a | / |

It can be learned from Table 2 that a single piece of transaction data may include respective attribute values of 10 transaction attributes. Attribute values of the same transaction attribute may be identical in different pieces of transaction data. For example, in the three pieces of transaction data in Table 2, the attribute values of the transaction attribute "identity of transaction transmitter" are all "Alice", and the attribute values of the transaction attribute "contract name" are all "c1". That is, the attribute values of the transaction attributes, such as "address", "contract name", and "identity of the transaction transmitter" may also comprise identical ones among the obtained M pieces of transaction data. In the conventional block storage solution, the same data is usually stored repeatedly, resulting in unnecessary space waste.

Operation S102: Sort, according to priorities of the N transaction attributes and the N attribute values of each piece of transaction data, the M pieces of transaction data into a transaction sequence.

In order to effectively compress attribute values repeatedly occurring in the M pieces of transaction data, the blockchain node may sorting the M pieces of transaction data, such that transactions among which attribute values change slightly are located as front as possible in the transaction sequence, without affecting integrity and accessibility of the pieces of transaction data. This achieves high data redundancy elimination efficiency in the subsequent differential encoding phase.

In all embodiments of the present disclosure, the priority of a transaction attribute may indicate likelihood of finding identical attribute values of the transaction attribute among the M pieces of transaction data. The priority may be set based on experience, that is, the priority may be preset. Alternatively, the priority may be set according to variation of attribute values of the transaction attribute in recent obtained transactions within a period. For example, the priority may be based on a running variance (also called online variance or dynamic variance) or a running standard deviation (also called online standard deviation or dynamic standard deviation) of the attribute values, and the variation of attribute values is reflected by the running variance or the running standard deviation. This is not limited in the present disclosure. A higher priority indicates that it is more likely to find a pair of identical (or substantially identical) values in the attribute values of the transaction attribute among the M pieces of transaction data. When sorting the M pieces of transaction data, the blockchain node prioritizes a transaction attribute with a highest priority, that is, the pieces of transaction data that have identical attribute values of the transaction attribute with highest priority shall be arranged adjacently in the transaction sequence. Under this premise, the transaction attribute with the second highest priority is then considered in the sorting for more detailed arrangement.

In all embodiments of the present disclosure, the respective priorities of the N transaction attributes may be determined based on variability of the attribute values of the N transaction attributes. That is, small variability of the attribute values of a transaction attribute leads to higher priority of the transaction attribute, and large variability of the attribute values of a transaction attribute leads to lower priority of the transaction attribute. The variability of the attribute values of the transaction attribute reflects likelihood of finding a pair of identical values from the attribute values of the transaction attribute of the M pieces of transaction data. The variability of the attribute value of each transaction attribute may be determined based on the running variance and/or the running standard deviation of the attribute values of the transaction attribute in recent transactions (e.g., recent pieces of transaction data) generated within a period. The period may refer to a historical period or a current period. For example, the variability of attribute values may be determined using the attribute values in the M pieces of transaction data.

In all embodiments of the present disclosure, the step of sorting, according to the priorities of the N transaction attributes and the N attribute values of each piece of transaction data, the M pieces of transaction data into the transaction sequence may comprise iterations that are denoted in order as 1^{st} iteration, 2^{nd} iteration, 3^{rd} iteration, etc. For an integer k, the k^{th} iteration may comprise operations. The N transaction attributes are traversed to obtain a k^{th} transaction attribute, where the priority of the k^{th} transaction attribute is lower than the priority of the (k-1)^{th} transaction attribute. The k^{th} sorting is performed on a candidate sequence of the M pieces of transaction data, which is obtained through the (k-1)^{th} sorting, according to the respective attribute value of the k^{th} transaction attribute in each piece of transaction data to obtain a new candidate sequence of the M pieces of transaction data. It is appreciated that when k = 1, the candidate sequence obtained in through the (k-1)^{th} sorting is an original sequence (i.e., the sequence as initially obtained) of the M pieces of transaction data. Afterwards, when the respective attribute values of the k^{th} transaction attribute in the M pieces of transaction data comprise identical values, the process proceeds to the (k+1)^{th} iteration, such that the (k+1)^{th} transaction attribute is obtained and the (k+1)^{th} sorting is performed on the candidate sequence obtained through the k^{th} sorting according to the respective attribute value of the (k+1)^{th} transaction attribute in each piece of transaction data. Otherwise, when the respective attribute values of the k^{th} transaction attribute in the M pieces of transaction data do not comprise identical values, there is no (k+1)^{th} iteration, and the candidate sequence obtained through the k^{th} sorting is determined to serve as the transaction sequence. Hence, the pieces of transaction data are sorted iteratively in a descending order of priority, which helps arrange pieces of transaction data having the largest amount of identical transaction data are arranged in successive adjacent positions. Further, this facilitates differential encoding, reduces data redundancy, and enhances blockchain performance. In all embodiment of the present disclosure, the operation of performing the k^{th} sorting on the candidate sequence obtained through the (k-1)^{th} sorting according to the respective attribute value of the k^{th} transaction attribute in each piece of transaction data to obtain the new candidate sequence of the M pieces of transaction data may comprise following operations. The M attribute values of the k^{th} transaction attribute are sorted to obtain an attribute-value sequence. Target pieces of transaction data are determined from the candidate sequence obtained through the (k-1)^{th} sorting, where the target pieces of transaction data refer to pieces of transaction data identical that are in first attribute value and successive in the candidate sequence obtained through the (k-1)^{th} sorting, and the first attribute value refers to the attribute value of the (k-1)^{th} transaction attribute. It is appreciated that when k = 1, the target pieces of transaction data are the M pieces of transaction data. Afterwards, the target pieces of transaction data are resorted in the candidate sequence obtained through the (k-1)^{th} to obtain the new candidate sequence, such that their order in the new candidate sequence is the same as order of their second attribute values in the attribute-value sequence, where the second attribute value refers to the attribute value of the k^{th} transaction attribute. This helps arrange identical attribute values of each transaction attribute in successive adjacent positions as much as possible. This facilitates differential encoding, reduces data redundancy, and enhances blockchain performance.

In all embodiments of the present disclosure, the operation of sorting the M attribute values of the k^{th} transaction attribute to obtain the attribute-value sequence may comprise following operations. The M attribute values of the k^{th} transaction attribute are divided into attribute-value groups, and a quantity of attribute values in each attribute-value group is determined, where each attribute-value group comprises the attribute values that are equal to a respective value. The sorting is performed in such a manner that in the attribute-value sequence, the attribute values in each attribute-value group are successive, and the attribute-value groups are arranged in a descending order of the quantity of attribute value. In this way, it facilitates replacing the identical attribute values with a preset coding symbol or coding character, and the same value does not need to be repeatedly stored. This can avoid unnecessary space waste, reduce data redundancy, and enhance performance of the blockchain system.

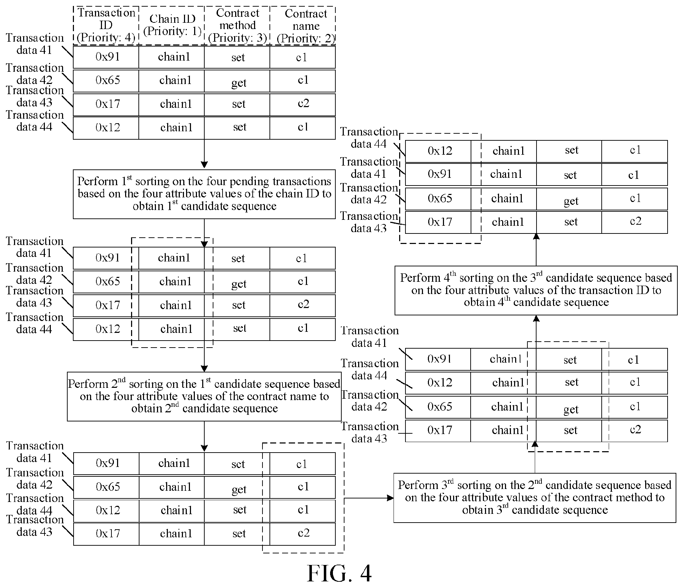

To facilitate understanding of the foregoing process of performing sorting on the M pieces of transaction data, FIG. 4 is a schematic diagram of a process of sorting pieces of transaction data according to an embodiment of the present disclosure. As shown in FIG. 4, it is assumed that a blockchain node (not depicted, which may be any blockchain node in the foregoing blockchain network as shown in FIG. 1, for example, may be the blockchain node 10b) needs to perform sorting on four pieces of transaction data, namely, a piece 41 of transaction data, a piece 42 of transaction data, a piece 43 of transaction data, and a piece 44 of transaction data. A single piece of transaction data includes attribute values of four transaction attributes. The four transaction attributes may be a transaction ID, a chain ID, a contract method, and a contract name. The transaction ID has a priority of 4, the chain ID has a priority of 1, the contract method has a priority of 3, and the contract name has a priority of 2. That is, the priority of the chain ID is higher than the priority of the contract name higher than the priority of the contract method higher than the priority of the transaction ID. Therefore, when the blockchain node traverses the four transaction attributes based on the respective priorities of the four transaction attributes, the 1^{st} transaction attribute is the chain ID.

As shown in FIG. 4, the blockchain node performs the 1^{st} sorting on the four pieces of transaction data based on four attribute values of the chain ID to obtain the 1^{st} candidate sequence of the four pieces of transaction data. A specific process of 1^{st} sorting may be as follows. The four attribute values of the chain ID are sorted to obtain the 1^{st} attribute-value sequence of the attribute values of the chain ID, the four pieces of transaction data are sorted in such a manner that their order in the 1^{st} candidate sequence are the same as an order of their attribute values of the chain ID in the 1^{st} attribute-value sequence. The sorting of the attribute values sorting may be lexicographical sorting. The lexicographic sorting is also called lexicographic arrangement, which refers to sorting based on an alphabetical order of characters or digits. In computer science, lexicographic sorting generally refers to sorting comparable objects, such as character strings, characters, or digits, into the lexicographic order. A basic principle of this method is as follows; if two objects have different characters at the same position, the two objects are sorted into an order same as the alphabetical order of the characters. To be specific, object having the character that is lexicographically smaller is prior to the one having the character that is lexicographically larger. The comparison goes character by character, and if one object terminates in this process, it precedes the other since it is shorter. If the two objects are completely identical, lexicographical positions of the two objects are identical. It can be learned from FIG. 4 that the four attribute values of the chain ID are all "chain1". Therefore, positions of the obtained four sorted chain ID attribute values do not change. the candidate sequence obtained after the 1^{st} sorting are in a following order: the piece 41 of transaction data, the piece 42 of transaction data, the piece 43 of transaction data, and the piece 44 of transaction data.

As shown in FIG. 4, when the blockchain node traverses the four transaction attributes based on the respective priorities of the four transaction attributes, the obtained 2^{nd} transaction attribute is the contract name. The blockchain node performs, based on four attribute values of the contract name, the 2^{nd} sorting on the 1^{st} candidate sequence to obtain the 2^{nd} candidate sequence. A specific process of the 2^{nd} sorting may be as follows. First, the four attribute values of the contract name are sorted to obtain the 2^{nd} attribute-value sequence, which are as follows: "c1" included in the piece 41 of transaction data, "c1" included in the piece 42 of transaction data, "c1" included in the piece 44 of transaction data, and "c2" included in the piece 43 of transaction data. Because the attribute values of the chain ID in the 1^{st} candidate sequence are all "chain1", the 1s^{t} candidate sequence are all target pieces of transaction data. In this case, the blockchain node resorts target pieces of transaction data in such a manner that their order in the 2^{nd} candidate sequence are the same as an order of their attribute values of the contract name in the 2^{nd} attribute-value sequence. The 2^{nd} candidate sequence is as follows: the piece 41 of transaction data, the piece 42 of transaction data, the piece 44 of transaction data, and the piece 43 of transaction data.

As shown in FIG. 4, when the blockchain node traverses the four transaction attributes based on the respective priorities of the four transaction attributes, the obtained 3^{rd} transaction attribute is the contract method. The blockchain node performs, based on four attribute values of the contract name, the 3^{rd} sorting on the 2^{nd} candidate sequence to obtain the 3^{rd} candidate sequence. A specific process of the 3^{rd} sorting may be as follows. First, the four attribute values of the contract method are sorted to obtain the 3^{rd} attribute-value sequence, which are as follows: "set" included in the piece 41 of transaction data, "set" included in the piece 44 of transaction data, "set" included in the piece 43 of transaction data, and "get" included in the piece 42 of transaction data. Because only the piece 41 of transaction data, the piece 42 of transaction data, and the piece 44 of transaction data are identical in attribute value of the contract name and are successive in position in the 2^{nd} candidate sequence, the blockchain node determines only the piece 41 of transaction data, the piece 42 of transaction data, and the piece 44 of transaction data in the candidate sequence obtained after 2^{nd} sorting as the target pieces of transaction data for the 3^{rd} sorting. In this case, the blockchain node resorts target pieces of transaction data in such a manner that their order in the 3^{rd} candidate sequence are the same as an order of their attribute values of the contract method in the 3^{rd} attribute-value sequence. To be specific, in the 3^{rd} attribute-value sequence, "set" included in the piece 41 of transaction data is located before "set" included in the piece 44 of transaction data, and "set" included in the piece 44 of transaction data is located before "get" included in the piece 42 of transaction data. Therefore, after the resorting, the piece 41 of transaction data is located before the piece 44 of transaction data, and the piece 44 of transaction data is located before the piece 42 of transaction data. Thereby, the 3^{rd} candidate sequence is as follows: the piece 41 of transaction data, the piece 44 of transaction data, the piece 42 of transaction data, and the piece 43 of transaction data.

As shown in FIG. 4, when the blockchain node traverses the four transaction attributes based on the respective priorities of the four transaction attributes, the obtained 4^{th} transaction attribute is the transaction ID. The blockchain node performs, based on four attribute values of the contract name, the 4^{th} sorting on the 3^{rd} candidate sequence to obtain the 4^{th} candidate sequence. A specific process of the 4^{th} sorting may be as follows. First, the four attribute values of the transaction ID are sorted to obtain the 4^{th} attribute-value sequence, which are as follows: "0x12" included in the piece 44 of transaction data, "0x17" included in the piece 43 of transaction data, "0x65" included in the piece 42 of transaction data, and "0x91" included in the piece 41 of transaction data. Because only the piece 41 of transaction data and the piece 44 of transaction data are identical in attribute value of the contract name and are successive in position in the 3^{rd} candidate sequence, the blockchain node determines only the piece 41 of transaction data and the piece 44 of transaction data in the 3^{rd} candidate sequence as the target pieces of transaction data for the 4^{th} sorting. In this case, the blockchain node resorts target pieces of transaction data in such a manner that their order in the 4^{th} candidate sequence are the same as an order of their attribute values of the transaction ID in the 3^{rd} attribute-value sequence. To be specific, in the 4^{th} attribute-value sequence, "0x12" included in the piece 44 of transaction data is located before "0x91" included in the piece 41 of transaction data. Therefore, after the resorting, the piece 44 of transaction data is located before the piece 41 of transaction data. In this way, the 4^{th} candidate sequence is as follows: the piece 44 of transaction data, the piece 41 of transaction data, the piece 42 of transaction data, and the piece 43 of transaction data.

After the traversal of the four transaction attributes is finished, the blockchain node determines the 4^{th} candidate sequence to serve as the transaction sequence, which is as follows: the piece 44 of transaction data, the piece 41 of transaction data, the piece 42 of transaction data, and the piece 43 of transaction data.

In all embodiments of the present disclosure, the operation of performing the k^{th} sorting on the candidate sequence of the M pieces of transaction data, which is obtained through the (k-1)^{th} sorting, according to the respective attribute value of the k^{th} transaction attribute in each piece of transaction data to obtain the new candidate sequence of the M pieces of transaction data may comprise following operations. Target pieces of transaction data are determined from the candidate sequence obtained through the (k-1)^{th} sorting, where the target pieces of transaction data are pieces of transaction data identical in first attribute value and successive in the candidate sequence obtained through the (k-1)^{th} sorting, and the first attribute value refers to the attribute value of the (k-1)^{th} first transaction attribute. It is appreciated that the target pieces of transaction data are the M pieces of transaction data when k = 1. Respective second attribute values in the target pieces of transaction data are sorted into an attribute-value sequence, where the second attribute value refers to the attribute value of k^{th} first transaction attribute. The target pieces of transaction data are resorted in the candidate sequence obtained through the (k-1)^{th} sorting according to their second attribute values to obtain the new candidate sequence, where the resorting is performed in such a manner that an order of the target pieces of transaction data in the new candidate sequence are the same as an order of their second attribute values in the attribute-value sequence. As an example, when the blockchain node as shown in FIG. 4 performs the 4^{th} sorting on the 3^{rd} candidate sequence according to the four attribute values of the contract method to obtain the 4^{th} candidate sequence, a specific process may be as follows. The blockchain node first determines the target pieces of transaction data. Because in the 3^{rd} candidate sequence, only the piece 41 of transaction data and the piece 44 of transaction data are successive pieces having the identical attribute values of the contract name, the blockchain node determines that only the piece 41 of transaction data and the piece 44 of transaction data serve as the target pieces of transaction data for the 4^{th} sorting. Then, the blockchain node sorts the attribute values of the transaction ID in the piece 41 of transaction data and the piece 44 of transaction data to obtain the 4^{th} attribute-value sequence, which is as follows: "0x12" included in the piece 44 of transaction data and "0x91" included in the piece 41 of transaction data. On a basis of the order of the above two attribute values of the transaction ID, the blockchain node adjusts the piece 44 of transaction data to a position before the piece 41 of transaction data. Therefore, the new candidate sequence obtained through the 4^{th} sorting are as follows: the piece 44 of transaction data, the piece 41 of transaction data, the piece 42 of transaction data, and the piece 43 of transaction data.

Operation S103: Generate N attribute-value sets, where each attribute-value set comprises the attribute values of a respective one of the N transaction attributes in the M pieces of transaction data, and an order of the attribute values of the respective transaction attribute in each attribute-value set is identical to an order of the attribute values of the respective transaction attribute in the transaction sequence.

The transaction sequence as shown in FIG. 4 is taken as an example. The attribute-value set of the transaction ID is {0x12, 0x91, 0x65, 0x17}, the attribute-value set of the chain ID is {chain1, chain1, chain1, chain1}, the attribute-value set of the contract method is {set, set, get, set}, and the attribute-value set of the contract name is {c1, c1, c1, c2}.

Operation S104: Perform differential encoding on the N attribute-value sets to obtain N attribute codes, respectively.

The differential encoding is a data compression technique, in which only a difference between elements in a data sequence is stored, instead of storing a full value of the data point each time it appears. In a blockchain transaction, differential encoding may be configured for reducing redundancy of storing same or similar transaction data. For example, if successive transactions come from a same transmitter, when these transactions are stored, an address of the transmitter may be stored only once, and only a tag or an index needs to be stored for each subsequent transaction to indicate that the content of this field is the same as that in a previous transaction.

By performing intelligent sorting and differential encoding on the pieces of transaction data, the present disclosure can reduce demands for storage resources and reduce storage costs. Moreover, because a volume of the piece of transaction data is reduced after compression, data transmission efficiency is enhanced, and a network load is reduced, which facilitates data synchronization and propagation in the blockchain system. In addition, a small data volume also means that during data query and processing, response time of the blockchain system is short, which enhances performance of the entire blockchain system.

In all embodiments of the present disclosure, the N attribute-value sets may comprise the 1^{st} attribute value set through the N^{th} that are arranged in order, and the operation of performing the differential encoding on the N attribute-value sets to obtain N attribute codes, respectively, may comprise following operations. For each Kₙ ranges from 1 to N, the headmost attribute value in the Kₙ^{th} attribute-value set (i.e., the 1^{st} attribute value in the order of the attribute values in the Kₙ^{th} attribute-value set) is written into a coding sequence and a calibration field that are configured for the Kₙ^{th} attribute-value set. The Kₙ^{th} attribute-value set is traversed according to the order of the attribute values in the Kₙ^{th} attribute-value set from the 1^{st} attribute value through the M^{th} attribute value. For each i ranging from 2 to M, when the i^{th} attribute value is different from the current attribute value in the calibration field, the i^{th} attribute value is appended to a tail (i.e., becomes a new last place) of the coding sequence, and then the attribute value in the calibration field is updated to be the i^{th} attribute value. Otherwise, when the i^{th} attribute value is identical to the current attribute value in the calibration field, a preset character is appended to the tail of the coding sequence. After the Kₙ^{th} attribute-value set is traversed, the attribute code of the Kₙ^{th} attribute-value set is determined according to the coding sequence of the Kₙ^{th} attribute-value set. For example, the coding sequence of the first attribute-value set serves as the attribute code directly, or it is directly coded into the attribute code. As an example, the Kₙ^{th} attribute-value set is the attribute-value set K₃={set, set, get, set} of the contract method in operation S103. The blockchain node may first write the 1^{st} attribute value into the coding sequence Z and the calibration field word, that is, Z={set} and word = set. Then, the blockchain node traverses the attribute-value set K₃ of the contract method to obtain the 2^{nd} attribute value (i.e., "set"). Because the 2^{nd} attribute value is identical to the current attribute value in the calibration field, the blockchain node only needs to add a special encoding character (assumed to be "*") to the tail of the coding sequence Z. In this case, the coding sequence Z is {set, *}, and the calibration field word is still "set". Then, the blockchain node further obtains the 3^{rd} attribute value (i.e., "get"). Because the 3^{rd} attribute value is different from the current attribute value in the calibration field word, the blockchain node adds the 3^{rd} attribute value to the tail of the coding sequence Z and updates the calibration field word. In this case, the coding sequence Z is {set, *, get}, and the calibration field word is "get". The rest can be deduced by analogy until the last attribute value in the attribute-value set K₃ is traversed, and the coding sequence Z is {set, *, get, set}. Therefore, the attribute code of the attribute-value set K₃ is {set, *, get, set}. By using the special encoding character to represent the attribute value repeats its immediate previous one, it is not necessary to store its full value. This helps reduce redundancy in the blockchain and improves performance of the blockchain system.

Operation S105: encapsulate the N attribute codes into a block, where the block is uploaded to the blockchain when the block is finalized through consensus.

In all embodiments of the present disclosure, the blockchain node may add the obtained N attribute codes into the pending block and then broadcast the pending block to other blockchain nodes in the blockchain network for the consensus on the pending block. When the block reaches the consensus in the blockchain network, the blockchain node may add the pending block to a blockchain ledger for storage.

According to the method provided in the embodiments of the present disclosure, a differential encoding mechanism is introduced. Continuous repeated attribute values of the same transaction attribute can be represented by a preset encoding symbol or character, and full attribute values do not need to be repeatedly stored. This avoids unnecessary space waste. In addition, in the present disclosure, the pieces of transaction data may be resorted based on the respective priorities of the transaction attributes and the attribute values. Such a sorting mechanism ensures that the pieces of transaction data having slights change are encoded first in the differential encoding phase. Therefore, high data redundancy elimination efficiency can be achieved in the differential encoding phase. As a result, storage space required for a block is reduced, and performance of the blockchain system is enhanced.

FIG. 5 is a schematic flowchart of a process of determining priority in a blockchain system according to an embodiment of the present disclosure. The method may be performed by a blockchain node (which is, for example, any blockchain node in the blockchain network in the embodiment as shown in FIG. 1, such as the blockchain node 10a). The method may be configured for determining the respective priorities of the N transaction attributes in the foregoing embodiment as shown in FIG. 3. Description is made below by using an example in which the method is performed by a blockchain node. In all embodiments of the present disclosure, the process of determining the priority may at least include operation S201 to operation S203.

Operation S201: Obtain a sliding window configured for each of the N transaction attributes, where the sliding window covers L historical attribute values of the transaction attribute.

Herein transaction attribute Tⱼ denotes a transaction attribute among the N transaction attributes in the foregoing embodiments, e.g., the one as shown FIG. 3, where j is a positive integer less than or equal to N. The sliding window for the transaction attribute Tⱼ is configured for continuously detecting and analyzing attribute values of the transaction attribute Tⱼ in the pieces of transaction data that have been uploaded into the blockchain recently. The sliding window "slides" when the attribute value of the transaction attribute Tⱼ in a new piece of transaction data is added into the window. To be specific, the attribute value of the transaction attribute Tⱼ the new piece of transaction data is added via one end (at a side of the sliding direction) of the sliding window, and the attribute value of the transaction attribute Tⱼ in an old piece of transaction data is removed from the window via the other end (at a side opposite to the sliding direction) of the sliding window.

Operation S202: Determine, using the sliding window and the attribute values of the transaction attribute in the M pieces of transaction data, a distance standard deviation of the transaction attribute.

Here the M pieces of transaction data refer to the M pieces of transaction data in the foregoing embodiments, e.g., the one as shown in FIG. 3. The distance standard deviation refers to a running distance standard deviation determined using the attribute values of the transaction attribute Tⱼ in the M pieces of transaction data and the historical attribute values of the transaction attribute Tⱼ covered by the sliding window. The distance standard deviation indicates the variability among a set of attribute values. Larger distance standard deviation indicates larger variability among the set of attribute values, that is, it is less likely to find repeated values in this set. Here the term "distance" may be regarded as a difference between two attribute values. When the two attribute values are identical, the distance between the two attribute values may be set as 0. When two attribute values are different, the distance between the two attribute values may be set as 1.

In all embodiments of the present disclosure, the operation of determining, using the sliding window and the attribute values of the transaction attribute in the M pieces of transaction data, the distance standard deviation of the transaction attribute may comprise following operations. The attribute values of the transaction attribute in the M pieces of transaction data are sequentially arranged adjacent to the sliding window in a sliding direction of the sliding window (hereinafter also called "appended to the sliding window"). The sliding window is slid along the sliding direction until L attribute values covered by the sliding window comprises the attribute values of the transaction attribute in the M pieces of transaction data. Then, the distance standard deviation of the transaction attribute is calculated using the L attribute values.

To facilitate understanding of a sliding process of the sliding window, FIG. 6 is a schematic diagram of a process of sliding a sliding window according to an embodiment of the present disclosure. As shown in FIG. 6, it is assumed that the transaction attribute Tⱼ is the contract name, and the sliding window for the transaction attribute is called contract-name sliding window. After obtaining the attribute values of the contract name (which are sequentially "c2", "c1", "c2", and "c2") included in four pieces of transaction data, the blockchain node may obtain the contract-name sliding window. The contract-name sliding window may include eight historical attribute values of the contract name, which are sequentially "c1", "c2", "c1", "c", "c3", "c4", "c1", and "c2". Then, the blockchain node may slide the contract-name sliding window to obtain the slid contract-name sliding window. It can be learned from FIG. 6 that the slid contract-name sliding window includes the attribute values of the contract name in the four pieces of transaction data and four historical contract names located at the tail of the initial contract-name sliding window. Therefore, the slid contract-name sliding window includes eight latest contract names, which are sequentially "c3", "c4", "c1", "c2", "c2", "c1", "c2", and "c2".

In all embodiments of the present disclosure, the operation of calculating, using the L attribute values (covered by the slid sliding window), the distance standard deviation of the transaction attribute may comprise following operations. A dataset (which may be also called a mapping dataset) is generated for the L attribute values, where the dataset comprises P distinct values among the L attribute values and a respective occurrence count of each distinct value among the L attribute values. The distance standard deviation of the transaction attribute is calculated using the quantity L and the respective occurrence count of each distinct value.

The dataset includes the P distinct values and the respective occurrence counts of the P distinct values. The occurrence count refers to a quantity of attribute values, which are equal to the corresponding distinct value, among the L updated attribute values. The distinct value refers to a value existing in the L attribute values, and there may be multiple attribute values equal to one distinct value among the L attribute values. In all embodiments of the present disclosure, the operation of generating the dataset for the L attribute values may comprise following operations. An initial dataset is generated. The L attribute values are traversed in an order from the 1^{st} attribute value through the L^{th} attribute value. For each q ranging from 1 to L, when the current initial dataset comprises any distinct value equal to the q^{th} attribute value, the occurrence count of this distinct value is increased by one. Otherwise, when the initial dataset comprises no distinct value equal to the q^{th} attribute value, the q^{th} attribute value is added into the initial dataset as a new distinct value, and the occurrence count of the new distinct value is set to equal to a preset value and added into the initial dataset. After the L attribute values are traversed, the initial dataset is determined to serve as the dataset for the L attribute values. For example, the dataset generated for the eight latest attribute values (c3, c4, c1, c2, c2, c1, c2, and c2) of the contract name in the foregoing slid contract-name sliding window may be denoted as Contact Name: Map (c1: 2, c2: 4, c3: 1, c4: 1). As an example, "c1: 2" represents that the distinct value "c2" occurs twice in the eight latest attribute values.

In all embodiments of the present disclosure, the operation of calculating, using the quantity L and the respective occurrence count of each distinct value, the distance standard deviation of said transaction attribute may comprise following operations. The P distinct values in the dataset are traversed in an order from the 1^{st} distinct value to the P^{th} distinct values. For each s ranging from 1 to P, a difference between L and the occurrence count of the s^{th} distinct value is calculated as a value distance, and a product of the value distance and the occurrence count of the s^{th} distinct value is calculated as an attribute distance of the s^{th} distinct value. After the P distinct values are traversed, a ratio of a sum of the P attribute distances to a square of L is calculated to obtain the distance standard deviation of the transaction attribute. It is appreciated the foregoing calculation may be implemented as equation (1) to obtain the distance variation (square of the distance standard deviation). $Dis = \frac{{\sum }_{s = 1}^{P} {P}_{s} ⋅ \left(L-{P}_{s}\right)}{{L}^{2}}$

Dis denotes the distance variation, Pₛ denotes the occurrence count of the s^{th} distinct value, and L denotes a total length of the mapping dataset, i.e., a quantity of the attribute values utilized for creating the dataset. P denotes a total quantity of the distinct values.

A longer sliding window (that is, a larger quantity of attribute values included in the window) indicates a more stable latest distance standard deviation corresponding to the transaction attribute Tⱼ that is calculated using the sliding window and the attribute values of the transaction attribute Tⱼ in the M pieces of transaction data. However, correspondingly, more computational resources are required for directly calculating the latest distance standard deviation corresponding to the transaction attribute Tⱼ based on the L attribute values. In this case, the blockchain node may choose to update the distance standard deviation step by step, using the new attribute value added into the sliding window and the attribute value removed from the sliding window, to obtain the newest distance standard deviation.

Hence, in all embodiments of the present disclosure, the operation of determining, using the sliding window and the attribute values of said transaction attribute in the M pieces of transaction data, the distance standard deviation of the said transaction attribute may comprise following operations. A historical distance standard deviation of the transaction attribute is obtained, where the historical distance standard deviation is calculated using the L historical attribute values in the sliding window. The attribute values of the transaction attribute in the M pieces of transaction data are sequentially adjacent to the sliding window in a sliding direction of the sliding window (i.e., appended to the sliding window). The sliding window is slid in the sliding direction stepwise, where the sliding comprises an order of steps from th 1^{st} step through the M^{th} step. For each t ranging from 1 to M, the t^{th} step of the sliding comprises discarding the attribute value located at a tail of the sliding window and adding a new attribute value to a head of the sliding window, where the sliding direction points from the tail of the sliding window to the head of the sliding window, and the new attribute is among the attribute values of the transaction attribute in the M pieces of transaction data. For each t ranging from 1 to M, an intermediate distance standard deviation for the t^{th} step of the sliding is determined, where the intermediate distance standard deviation is updated according to the discarded attribute value and the added attribute value. It is appreciated that the intermediate distance standard deviation is determined to be equal to the historical distance standard when t = 1. The intermediate distance standard deviation for the M^{th} step is determined to serve as the distance standard deviation of the said transaction attribute. That is, when the blockchain node has obtained the historical distance standard deviation of the attribute values in the sliding window, the blockchain node may update the historical distance standard deviation step by step rather than calculating the new distance standard deviation from the attribute values each time the window slides.

In all embodiments of the present disclosure, the operation of updating the intermediate distance standard according to the discarded attribute value and the added attribute value may comprise following operations. After the t^{th} step of the sliding, an addition quantity and a removal quantity of the sliding window are determined, where the addition quantity is a quantity of values equal to the added attribute value in the sliding window, and the removal quantity is a quantity of values equal to the discarded attribute in the sliding window. A first difference is subtracted from a second difference to obtain a delta attribute distance, where the first distance is equal to L minus the addition quantity, and the second distance is equal to L minus the removal quantity. A sum of a ratio of the delta attribute distance to a square of L and the intermediate distance standard deviation for the (t-1)^{th} step of the sliding to obtain the intermediate distance standard deviation for the t^{th} step of the sliding. The foregoing update process may be implemented as calculation of the distance variation (i.e., a square of the distance variation) as shown in equation (2).${Dis}_{t} = {Dis}_{t - 1} + \frac{\left(L-{P}_{t}\right) - \left(L-{P}_{t - 1}\right)}{{L}^{2}}$

Disₜ denotes the intermediate distance standard deviation for the t^{th} step of the sliding, Disₜ₋₁ denotes the intermediate distance standard deviation for the (t-1)^{th} step of the sliding, Pₜ denotes the addition quantity, Pₜ₋₁ denotes the removal quantity, and L denotes a length of the sliding window, namely, a quantity of the attribute values in the sliding window.

Operation S203: Determine the respective priorities of the N transaction attributes according to the respective distance standard deviations of the N transaction attribute.

In all embodiments of the present disclosure, a smaller distance standard deviation of the transaction attribute Tⱼ indicates smaller variability of the attribute values of the transaction attribute Tⱼ in the pieces of transaction data, namely, it is more likely to find identical attribute values in the attribute values of the transaction attribute Tⱼ. Hence, the priority of this transaction attribute Tⱼ is higher. For example, when the distance standard deviation of transaction attribute T₁ < the distance standard deviation of transaction attribute T₃ < the distance standard deviation of transaction attribute T₂, the blockchain node may determine that the transaction attribute T₁ has a priority of 1, the transaction attribute T₃ has a priority of 2, and the transaction attribute T₂ has a priority of 3, that is, the priority of the transaction attribute T₁ is higher the priority of the transaction attribute T₃ higher the priority of the transaction attribute T₂. The priority is determined based on the distance standard deviation, which helps heighten a priority of a transaction attribute with small variability and lower a priority of a transaction attribute with large variability. This facilitates differential encoding for a piece of transaction data.

According to the method provided herein, running standard deviations of the transaction attributes in transaction data may be calculated (that is, the distance standard deviation is updated each time a block is generated), and the priorities corresponding to the transaction attributes are re-determined based on such a statistical feature. In this way, when the pieces of transaction data are sorted subsequently, a transaction attribute having small variability of attribute values may be prioritized to achieve high data redundancy elimination efficiency in the subsequent differential encoding phase. Moreover, continuity of the transaction attributes may be analyzed (since the running standard deviation is calculated) by using a sliding window technique. In this way, the system can monitor and evaluate a trend of the attribute values in real time and can adapt to a change in transaction type, which ensures optimal performance of the compression mechanism in different transaction environments. Based on the sliding window technique, a distance standard deviation of pending data is calculated and updated in real time. The dynamic data processing method enables the blockchain system to adaptively adjust a data processing policy to prioritize attribute values with small variability in processing and sorting. This achieves efficient compression in the differential encoding phase. This adaptability enables the present disclosure to handle different transaction types and data changes. This ensures compression efficiency and enhances adaptability of the blockchain system to future data modes.

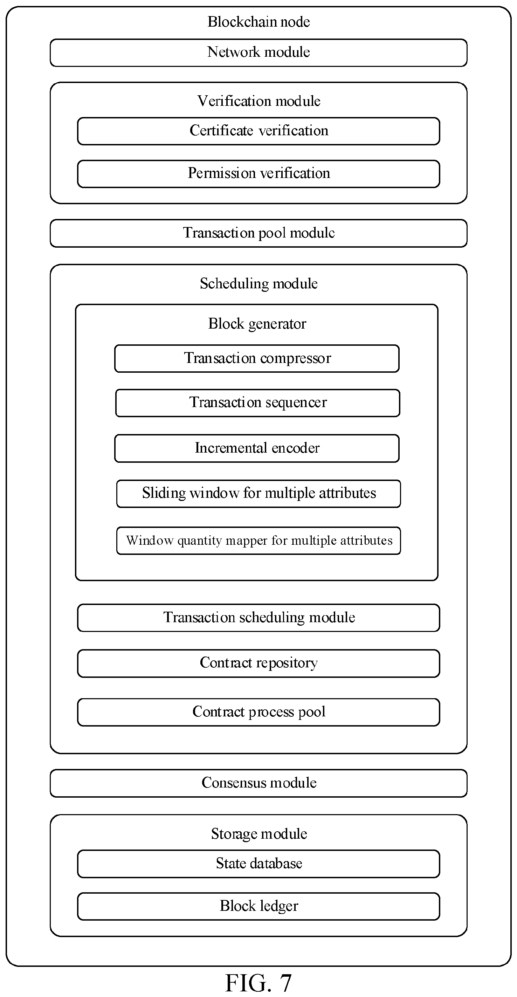

Further, the methods in the embodiments corresponding to FIG. 3 and FIG. 5 may be implemented by setting different system architectures based on an actual situation. For example, FIG. 7 is a diagram of architecture of a system for performing differential encoding in a method of compressing data of a blockchain using a sliding window and a running standard deviation according to an embodiment of the present disclosure. As shown in FIG. 7, a blockchain node may include a network module, a verification module, a transaction pool module, a scheduling module, a consensus module, and a storage module. The following specifically describes an internal implementation of the blockchain node and interaction between the modules. Detailed descriptions are provided below.

The network module shown in FIG. 7 is responsible for processing all network communication between a node and other nodes, including transmission, receiving, and forwarding of data. The network module is a bridge through which the node interacts with the outside and ensures that information can be securely and efficiently transmitted in a blockchain network. The network module processes all operations at a network layer, such as connection management, data transmission protocol implementation, node discovery, and data synchronization.

The verification module shown in FIG. 7 is primarily responsible for ensuring validity and correctness of transactions and blocks. Generally, the verification module includes two submodules: certificate verification and permission verification. Certificate verification is responsible for verifying an identity certificate of a creator of a transaction or a block, to ensure validity and a confidence level of the transaction or the block. Permission verification is responsible for checking whether an entity initiating a piece of transaction data has a permission to execute the piece of transaction data and whether a transaction satisfies a rule and a policy of a blockchain network. For example, some transactions may only be allowed to be executed by a particular user or character.

The transaction pool module shown in FIG. 7 is a temporary storage area and is configured for storing transactions that have been received by a blockchain nodes but have not been packaged into a block. The transaction pool allows the node to sort and select transactions, to determine which transactions are to be included in a next block.

The scheduling module shown in FIG. 7 is responsible for coordinating various activities of the blockchain node, including receiving and processing of a piece of transaction data, and block generation. The scheduling module includes the following submodules: a block generator, a transaction scheduling module, a contract repository, and a contract process pool. The block generator is responsible for generating a new block. The block generator selects appropriate transactions from the transaction pool and assembles the t transactions (pieces of transaction data) into a block according to specific rules. The transaction scheduling module is responsible for managing transactions in the transaction pool, and determining which transactions are prioritized or included in a new block. The contract repository is configured for storing all smart contract code deployed on the blockchain and related metadata. The contract process pool is responsible for managing an execution environment of a smart contract and providing resource isolation and execution efficiency.

The block generator shown in FIG. 7 further includes the following submodules: a transaction compressor, a transaction sequencer, an incremental encoder, a sliding window, and window quantity mapping. The transaction compressor is responsible for compressing transaction data, to reduce a size of a block. The transaction sequencer is configured to determine order of pieces of transaction data in the block. The incremental encoder encodes the transaction data through a differential encoding technique, to further compress the data. The sliding window is configured to implement a sliding window technique to detect continuity of transaction attributes. window quantity mapping is configured for maintaining a mapping relationship among transaction attributes in a sliding window, to support running standard deviation calculation.

The consensus module shown in FIG. 7 implements a consensus algorithm in the blockchain network and is a key to blockchain security and consistency. The consensus module ensures that all nodes reach consensus on a state of the network and verifies validity of a new block.

The storage module shown in FIG. 7 is responsible for maintaining and managing all data storage in the blockchain, including a current state and a historical record. The storage module typically includes two submodules: a state database and a block ledger. The state database is configured for storing a current blockchain state, such as an account balance or a smart contract state. The block ledger is configured for storing all blocks and transactions that have been confirmed by the network, to form a historical record of the blockchain.

The modules shown in FIG. 7 may be deployed in a blockchain node, and functions provided by the modules may also be implemented by the blockchain node.

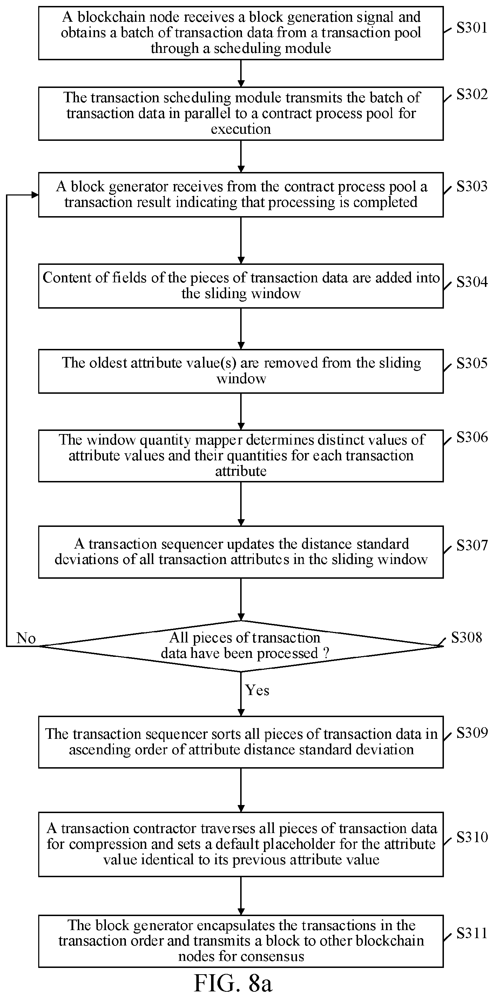

Through the coordinated operation of the modules in the system architecture of the transaction differential encoding block compression solution based on a sliding window and a running standard deviation provided in the embodiments of the present disclosure work together, the blockchain node can efficiently and stably implement a full life cycle process of the transaction differential encoding block compression solution based on a sliding window and a running standard deviation, including a transaction sorting process based on a sliding window and a running standard deviation (a process in which the blockchain node calculates a running standard deviation of a transaction attribute based on information about a latest sliding window when creating a new block, determines a priority of the transaction attribute based on the running standard deviation, and sorts transactions), and a block compression process based on transaction differential encoding (a process in which the blockchain node performs differential encoding on attributes of pieces of transaction data in the sorted transactions, to compress redundant successive fields). Further, to facilitate understanding of the transaction sorting process based on a sliding window and a running standard deviation that is implemented by using the method provided in the foregoing embodiments and the system architecture of the transaction differential encoding block compression solution based on a sliding window and a running standard deviation shown in FIG. 7, FIG. 8a is a schematic diagram of a transaction sorting process based on a sliding window and a running standard deviation according to an embodiment of the present disclosure. As shown in FIG. 8a, the entire transaction sorting process may include operation S301 to operation S311:
Operation S301: A blockchain node receives a block generation signal and obtains a batch of transaction data from a transaction pool through a scheduling module.

Here a quantity of pieces of transaction data in the batch may be M, where M is a positive integer. Therefore, the batch of pieces of transaction data may be the M pieces of transaction data in the embodiment as shown in FIG. 3.

Operation S302: The transaction scheduling module transmits the batch of transaction data in parallel to a contract process pool for execution.

Operation S303: A block generator receives from the contract process pool a transaction result indicating that processing is completed.

Operation S304: Content of fields of the pieces of transaction data are added into the sliding window.

The piece of transaction data may include a plurality of fields, and a single field is configured for storing the attribute value of a single transaction attribute. Therefore, content of the field of the pieces of transaction data may refer to the attribute value of the transaction attributes in the pieces of transaction data.

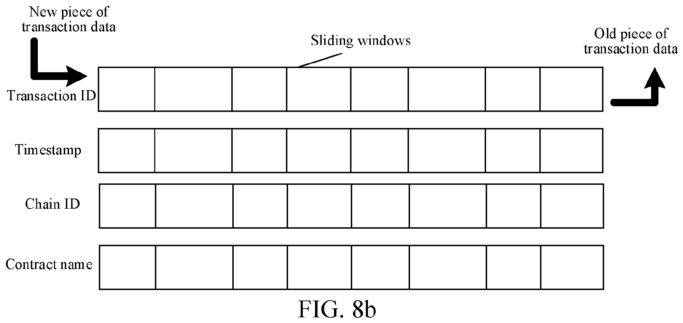

The sliding window may refer to multiple sliding windows corresponding to the transaction attributes, respectively. Adding the content of the fields of the pieces of transaction data into the sliding window means that attribute values of the same transaction attribute are added into the sliding window corresponding to the transaction attribute. For example, as shown in FIG. 8b, transaction attributes include a transaction ID, a timestamp, a chain ID, and a contract name. A single transaction attribute is provided with a single sliding window, the attribute value in each new piece of transaction data is added to the sliding window for the corresponding transaction attribute, and an old value in the sliding window is removed from the sliding window. The new piece of transaction data may be called a pending piece of transaction data, and the old piece of transaction data may be a piece of transaction data which has been encapsulated into a block.

Operation S305: The oldest attribute value(s) are removed from the sliding window.

Removal of the oldest attribute value(s) means that historical attribute values are deleted. A removal quantity is determined based on a quantity of the added attribute values, and the removal quantity needs to be consistent with the quantity of added attribute values.

Operation S306: The window quantity mapper determines distinct values of attribute values and their quantities for each transaction attribute.

Specifically, that the attribute map values corresponding to the transaction attribute are updated means that a dataset for each transaction attribute is determined. For a specific implementation, refer to the specific description of operation S202 in the foregoing embodiment corresponding to FIG. 5. Details are not described herein again.

Operation S307: A transaction sequencer updates the distance standard deviations of all transaction attributes in the sliding window.

The transaction sequencer updating the attribute distance standard deviations of all transaction attributes in the multi-transaction sliding window means that the newest distance standard deviation corresponding to each transaction attribute is determined based on the sliding window corresponding to the transaction attribute. For a specific determining process, refer to the feasible implementation process of operation S202 in the foregoing embodiment corresponding to FIG. 5. Details are not described herein again.

Operation S308: Determine whether all pieces of transaction data have been processed, and if yes, perform operation S309, or if not, return to perform operation S303.

Operation S309: The transaction sequencer sorts all pieces of transaction data in ascending order of attribute distance standard deviation.

The sorting process may refer to the specific description of operation S102 in the foregoing embodiment corresponding to FIG. 3. Details are not described herein again.

Operation S310: A transaction contractor traverses all pieces of transaction data for compression and sets a default placeholder for the attribute value identical to its previous attribute value.

Compressing the pieces of transaction data means that the differential encoding is performed on the pieces of transaction data. For a specific implementation, refer to the specific description of operation S103 and operation S104 in the foregoing embodiment corresponding to FIG. 3. Details are not described herein again.

Operation S311: The block generator encapsulates the transactions in the transaction order and transmits a block to other blockchain nodes for consensus.

For an implementation of operation S311, refer to the implementation of operation S105 in the foregoing embodiment corresponding to FIG. 3. Details are not described herein again.

According to the method provided in the embodiments of the present disclosure, an adaptive running standard deviation sorting and storage optimization mechanism of multi-attribute transaction data is provided. Running standard deviations of attributes in a piece of transaction data are calculated, and transactions are resorted based on this statistical feature. Such a sorting mechanism prioritizes a transaction with a small attribute value change, to achieve high data redundancy elimination efficiency in the subsequent differential encoding phase. By using this adaptive sorting method, storage demands can be significantly reduced and data integrity and accessibility can be maintained. This mechanism is not only applicable to a current piece of transaction data but also can be extended to a future data modem. It is very forward-looking and adaptable.

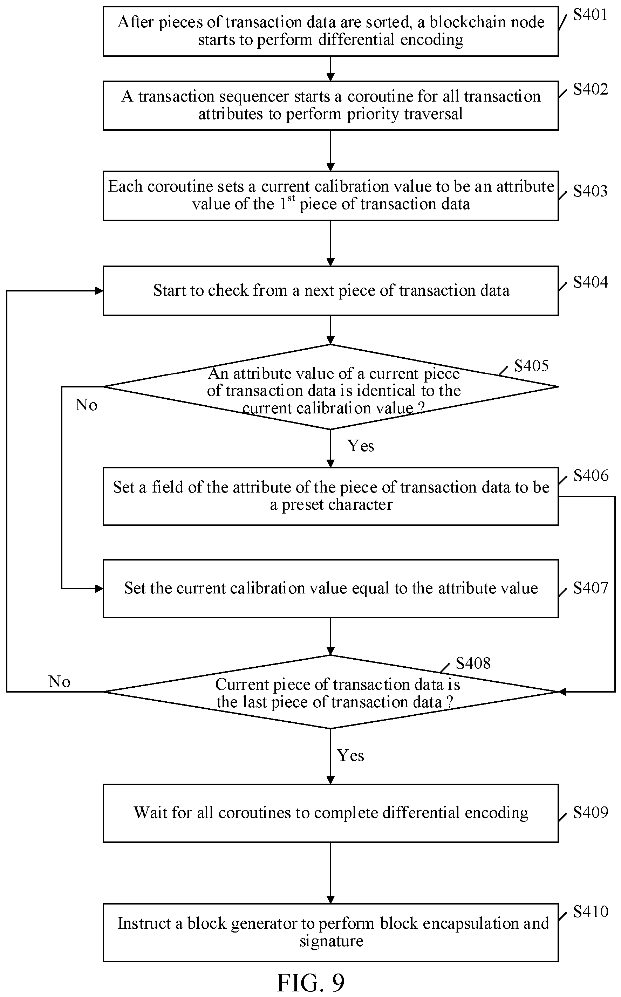

Further, to facilitate understanding of the block compression process based on transaction differential encoding that is implemented by using the method provided in the foregoing embodiments and the system architecture of the transaction differential encoding block compression solution based on a sliding window and a running standard deviation shown in FIG. 7, FIG. 9 is a schematic diagram of a process of compressing block data using transaction differential encoding according to an embodiment of the present disclosure. As shown in FIG. 9, the entire block compression process may include operation S401 to operation S410:
Operation S401: After pieces of transaction data are sorted, a blockchain node starts to perform differential encoding.
Operation S402. A transaction sequencer starts a coroutine for all transaction attributes to perform priority traversal.

Here he blockchain node may start a coroutine for each transaction attribute, and the coroutine is configured for performing traversal in order of the pieces of transaction data to obtain attribute values of a corresponding transaction attribute that are included in all pieces of transaction data. In an embodiment, the coroutine may first obtain the attribute values of the corresponding transaction attribute that are included in all pieces of transaction data, sequentially add the attribute values to a same attribute-value set, and then directly obtain corresponding attribute values from the attribute-value set, to complete differential encoding of the attribute values of the corresponding transaction attribute.

Operation S403: Each coroutine sets a current calibration value to be an attribute value of the 1^{st} piece of transaction data.

Each coroutine performs operation S404 to operation S408 and the coroutines do not affect each other. It is assumed that a transaction attribute corresponding to coroutine A is a contract name, the coroutine A may set the current calibration value as the attribute value of the contract name that is included in the 1^{st} piece of transaction data.

Operation S404: Start to check from a next piece of transaction data.

Operation S405: Determine whether an attribute value of a current piece of transaction data is identical to the current calibration value. If the attribute value of the current piece of transaction data is identical to the current calibration value, perform operation S406, or if the attribute value of a current piece of transaction data is different from the current calibration value, perform operation S407.

Operation S406: Set a field of the attribute of the piece of transaction data to be a preset character, and perform operation S408.

Specifically, the preset character is typically a placeholder that requires little storage space, such as "*".

Operation S407: Set the current calibration value equal to the attribute value, and perform operation S408.

Operation S408: Determine whether the current piece of transaction data is the last piece of transaction data. If the current piece of transaction data is the last piece of transaction data, perform operation S409, or if the current piece of transaction data is not the last piece of transaction data, return to perform operation S404.

Operation S409: Wait for all coroutines to complete differential encoding.

Operation S410: Instruct a block generator to perform block encapsulation and signature.

According to the method provided in the embodiments of the present disclosure, a compression policy in which continuity of attribute values is analyzed by using a sliding window technique, and differential encoding is implemented based on this analysis. By dynamically updating pieces of transaction data in a sliding window, a system can monitor and evaluate a change trend of an attribute value in real time, to effectively mark and compress successive identical attribute values in an encoding process. Such a policy not only improves data compression efficiency but also can adapt to a change in a transaction mode due to dynamic nature. This ensures optimal performance of the compression mechanism in different transaction environments.

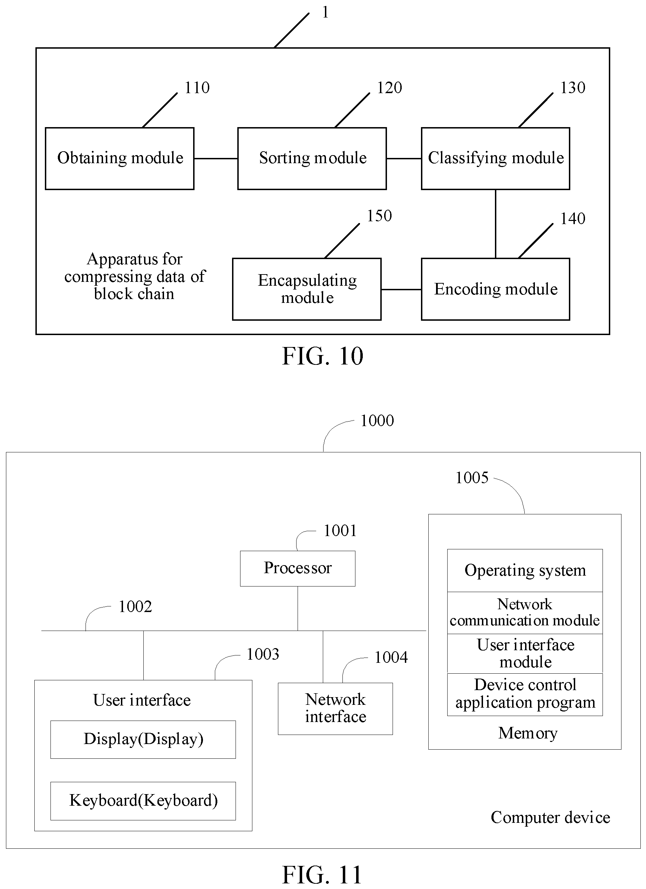

FIG. 10 is a schematic structural diagram of an apparatus for compressing data of a blockchain according to an embodiment of the present disclosure. The apparatus may be a computer program (including program code) running on a computer device. For example, the apparatus is application software. The apparatus 1 may be configured to perform corresponding operations in the method provided in the foregoing embodiments of the present disclosure. As shown in FIG. 10, the apparatus 1 may include: an obtaining module 110, a sorting module 120, a classifying module 130, an encoding module 140, and an encapsulating module 150.

The obtaining module 110 is configured for obtaining M pieces of transaction data, where each piece of transaction data comprises N attribute values of N transaction attributes, respectively, and M and N are both positive integers.

The sorting module 120 is configured for sorting, according to priorities of the N transaction attributes and the N attribute values of each piece of transaction data, the M pieces of transaction data into a transaction sequence.

The classifying module 130 is configured for generating N attribute-value sets, where each attribute-value set comprises the attribute values of a respective one of the N transaction attributes in the M pieces of transaction data, and an order of the attribute values of the respective transaction attribute in each attribute-value set is identical to an order of the attribute values of the respective transaction attribute in the transaction sequence.

The encoding module 140 is configured for performing differential encoding on the N attribute-value sets to obtain N attribute codes, respectively.

The encapsulating module 150 is configured for encapsulating the N attribute codes into a block, where the block is uploaded to the blockchain when the block is finalized through consensus.

In all embodiments of the present disclosure, when sorting, according to the priorities of the N transaction attributes and the N attribute values of each piece of transaction data, the M pieces of transaction data into the transaction sequence, the sorting module 120 may be configured for performing iterations. Each iteration comprises: traversing the N transaction attributes to obtain a first transaction attribute, where the priority of the first transaction attribute obtained in said iteration is lower than the priority of the first transaction attribute obtained in an immediately previous iteration; resorting a candidate sequence of the M pieces of transaction data according to the respective attribute value of the first transaction attribute in each piece of transaction data to obtain a resorted candidate sequence of the M pieces of transaction data, where the resorted candidate sequence obtained in the immediately previous iteration serves as the candidate sequence in said iteration when said iteration is not an earliest one of the iterations, and an original sequence of the M pieces of transaction data serves as the candidate sequence in said iteration when said iteration is the earliest one of the iterations; entering a next iteration, when the respective attribute values of the first transaction attribute in the M pieces of transaction data comprise identical values; and determining the resorted candidate sequence obtained in said iteration to serve as the transaction sequence without entering a next iteration, when the respective attribute values of the first transaction attribute in the M pieces of transaction data do not comprise identical values.

In all embodiments of the present disclosure, when resorting the candidate sequence of the M pieces of transaction data according to the respective attribute value of the first transaction attribute in each piece of transaction data to obtain the resorted candidate sequence of the M pieces of transaction data, the sorting module 120 may be configured for: sorting the M attribute values of the first transaction attribute to obtain an attribute-value sequence; determining target pieces of transaction data from the candidate sequence, where when said iteration is not the earliest one of the iterations, the target pieces of transaction data are pieces of transaction data identical in first attribute value and successive in the candidate sequence, where the first attribute value is the attribute value of the first transaction attribute obtained in the immediately previous iteration, and when said iteration is the earliest one of the iterations, the target pieces of transaction data are the M pieces of transaction data; resorting, according to positions of second attribute values of the target pieces of transaction data in the attribute-value sequence, the target pieces of transaction data in the candidate sequence to obtain the resorted candidate sequence, where the second attribute value is the attribute value of the first transaction attribute obtained in said iteration.

In all embodiments of the present disclosure, when sorting the M attribute values of the first transaction attribute to obtain an attribute-value sequence, the sorting module 120 may be configured for: grouping the M attribute values of the first transaction attribute into attribute-value groups and determining a quantity of attribute values in each attribute-value group, where each attribute-value group comprises the attribute values that are equal to a respective value, where the attribute-value sequence, the attribute values in each attribute-value group are successive, and the attribute-value groups are arranged in a descending order of the quantity of attribute values.

In all embodiments of the present disclosure, the N attribute-value sets comprise a first attribute-value set. When performing the differential encoding on the N attribute-value sets to obtain N attribute codes, respectively, the encoding module 140 may be configured for: writing a headmost attribute value in the first attribute-value set into a coding sequence and a calibration field that are configured for the first attribute-value set; traversing the first attribute-value set according to the order of the attribute values in the first attribute-value set from a first attribute value through an M^{th} attribute value, where for each i ranging from 2 to M, when the i^{th} attribute value is different from a current attribute value in the calibration field, the i^{th} attribute value is appended to a tail of the coding sequence, and then current attribute value in the calibration field is updated to be the i^{th} attribute value, and when the i^{th} attribute value is identical to the current attribute value in the calibration field, a preset character is appended to the tail of the coding sequence; and determining, after the first attribute-value set is traversed, the attribute code of the first attribute-value set according to the coding sequence of the first attribute-value set.

In all embodiments of the present disclosure, the sorting module 120 may be configured for: for each of the N transaction attributes, obtaining a sliding window configured for said transaction attribute, where the sliding window covers L historical attribute values of said transaction attribute, and determining, using the sliding window and the attribute values of said transaction attribute in the M pieces of transaction data, a distance standard deviation of the said transaction attribute; and determining the respective priorities of the N transaction attributes according to the respective distance standard deviations of the N transaction attributes.

In all embodiments of the present disclosure, when determining, using the sliding window and the attribute values of said transaction attribute in the M pieces of transaction data, the distance standard deviation of the said transaction attribute, the sorting module 120 may be configured for: arranging the attribute values of said transaction attribute in the M pieces of transaction data sequentially adjacent to the sliding window in a sliding direction of the sliding window; sliding the sliding window along the sliding direction until L attribute values covered by the sliding window comprises the attribute values of said transaction attribute in the M pieces of transaction data; and calculating, using the L attribute values, the distance standard deviation of said transaction attribute.

In all embodiments of the present disclosure, when calculating, using the L attribute values, the distance standard deviation of said transaction attribute, the sorting module 120 may be configured for: generating a dataset for the L attribute values, where the dataset comprises P distinct values among the L attribute values and a respective occurrence count of each distinct value among the L attribute values; and calculating, using L and the respective occurrence count of each distinct value, the distance standard deviation of said transaction attribute.

In all embodiments of the present disclosure, when generating the dataset for the L attribute values, the sorting module 120 may be configured for: establishing an initial dataset; traversing the L attribute values in an order from a first attribute value through a L^{th} attribute value, where for each q ranging from 1 to L, when the initial dataset comprises a distinct value equal to the q^{th} attribute value, the occurrence count of the distinct value is increased by one, and when the initial dataset does not comprise the distinct value equal to the q^{th} attribute value, the q^{th} attribute value is added into the initial dataset as a new distinct value, and the occurrence count of the new distinct value is set to equal to a preset value and added into the initial dataset; and determining the initial dataset to serve as the dataset for the L attribute values, after the L attribute values are traversed.

In all embodiments of the present disclosure, when calculating, using L and the respective occurrence count of each distinct value, the distance standard deviation of said transaction attribute, the sorting module 120 may be configured for: traversing to the P distinct values in the dataset in an order from a first distinct value to a P^{th} distinct values, where for each s ranging from 1 to P, a difference between L and the occurrence count of the s^{th} distinct value is calculated as a value distance, and a product of the value distance and the occurrence count of the s^{th} distinct value is calculated as an attribute distance of the s^{th} distinct value; and calculating, after the P distinct values are traversed, a ratio of a sum of the P attribute distances to a square of L to obtain the distance standard deviation of said transaction attribute.

In all embodiments of the present disclosure, when determining, using the sliding window and the attribute values of said transaction attribute in the M pieces of transaction data, the distance standard deviation of the said transaction attribute, the sorting module 120 may be configured for: obtaining a historical distance standard deviation of said transaction attribute, where the historical distance standard deviation is calculated using the L historical attribute values in the sliding window; arranging the attribute values of said transaction attribute in the M pieces of transaction data sequentially adjacent to the sliding window in a sliding direction of the sliding window; sliding the sliding window in the sliding direction stepwise, where the sliding comprises an order of steps from a first step through an M^{th} step, and for each t ranging from 1 to M, the t^{th} step of the sliding comprises discarding the attribute value located at a tail of the sliding window and adding a new attribute value to a head of the sliding window, the sliding direction points from the tail of the sliding window to the head of the sliding window, where the new attribute value is among the attribute values of said transaction attribute in the M pieces of transaction data; determining, for each t ranging from 1 to M, an intermediate distance standard deviation for the t^{th} step of the sliding, where the intermediate distance standard deviation is determined to be equal to the historical distance standard when t is equal to 1, and the intermediate distance standard deviation is updated according to the discarded attribute value and the added attribute value when t is not equal to 1; and determining the intermediate distance standard deviation for the M^{th} step to serve as distance standard deviation of the said transaction attribute.

In all embodiments of the present disclosure, when updating the intermediate distance standard according to the discarded attribute value and the added attribute value, the sorting module 120 may be configured for: determining, after the t^{th} step of the sliding, an addition quantity and a removal quantity of the sliding window, where the addition quantity is a quantity of values equal to the added attribute value in the sliding window, and the removal quantity is a quantity of values equal to the discarded attribute in the sliding window; subtracting a first difference from a second difference to obtain a delta attribute distance, where the first distance is equal to L minus the addition quantity, and the second distance is equal to L minus the removal quantity; and calculating a sum of a ratio of the delta attribute distance to a square of L and the intermediate distance standard deviation for the (t-1)^{th} step of the sliding to obtain the intermediate distance standard deviation for the t^{th} step of the sliding.

Here a blockchain node obtains the M pieces of transaction data, where each piece of transaction data comprises the N attribute values of the N transaction attributes, respectively. The blockchain node sorts the M pieces of transaction data into a transaction sequence according to the priorities of the N transaction attributes and the N attribute values of each piece of transaction data. The blockchain node then generates the N attribute-value sets, where each attribute-value set comprises the attribute values of the respective one of the N transaction attributes in the M pieces of transaction data, and the order of the attribute values of the respective transaction attribute in each attribute-value set is identical to the order of the attribute values of the respective transaction attribute in the transaction sequence. The blockchain node performs the differential encoding on the N attribute-value sets to obtain the N attribute codes, respectively. Afterwards, the blockchain node encapsulates the N attribute codes into the block, where the block is uploaded to the blockchain when the block is finalized through consensus. Herein the pieces of transaction data are first sorted using the priorities of the transaction attributes and the attribute values. The sorting ensures that a group of pieces that have little change in the attribute values is encoded first in the differential encoding, and thus data redundancy can be eliminated more thoroughly in the differential encoding phase. The blocks can occupy less space, and performance of the blockchain system is enhanced.

FIG. 11 is a schematic structural diagram of a computer device according to an embodiment of the present disclosure. As shown in FIG. 11, the block compression apparatus 1 in the foregoing embodiment corresponding to FIG. 10 may be used in a computer device 1000. The computer device 1000 may include: a processor 1001, a network interface 1004, and a memory 1005. In addition, the computer device 1000 may further include: a user interface 1003 and at least one communication bus 1002. The communications bus 1002 is configured to implement connection and communication between the components. The user interface 1003 may include a display, a keyboard. In an embodiment, the user interface 1003 may further include a standard wired interface and a standard wireless interface. In an embodiment, the network interface 1004 may include a standard wired interface and a standard wireless interface (such as a Wi-Fi interface). The memory 1005 may be a high-speed random-access memory (RAM), or may be a non-volatile memory, such as at least one magnetic disk memory. In an embodiment, the memory 1005 may alternatively be at least one storage apparatus away from the processor 1001. As shown in FIG. 10, the memory 1005 used as a computer-readable storage medium may include an operating system, a network communication module, a user interface module, and a device control application program.

In the computer device 1000 shown in FIG. 10, the network interface 1004 may provide a network communication element. The user interface 1003 is primarily configured for providing an input interface for a user. The processor 1001 may be configured to invoke the device control application program stored in the memory 1005, to implement following steps.

M pieces of transaction data are obtained, where each piece of transaction data comprises N attribute values of N transaction attributes, respectively, and M and N are both positive integers;
The M pieces of transaction data are sorted into a transaction sequence according to priorities of the N transaction attributes and the N attribute values of each piece of transaction data.

N attribute-value sets are generated, where each attribute-value set comprises the attribute values of a respective one of the N transaction attributes in the M pieces of transaction data, and an order of the attribute values of the respective transaction attribute in each attribute-value set is identical to an order of the attribute values of the respective transaction attribute in the transaction sequence;
Differential encoding is performed on the N attribute-value sets to obtain N attribute codes, respectively.

The N attribute codes are encapsulated into a block, where the block is uploaded to the blockchain when the block is finalized through consensus.

The computer device 1000 described in embodiments of the present disclosure may implement the description of the block compression method in the foregoing embodiment corresponding to any one of FIG. 3 and FIG. 5. Details are not described herein again. In addition, the description of beneficial effects of the same method are not described herein again.

Embodiments of the present disclosure further provide a computer-readable storage medium. The computer-readable storage medium stores a computer program executed by the block compression apparatus 1 mentioned above, and the computer program includes program instructions. When executing the program instructions, the processor can implement the description of the block compression method in the foregoing embodiment corresponding to any one of FIG. 3 and FIG. 5. Therefore, details are not described herein again. In addition, the description of beneficial effects of the same method are not described herein again. For technical details that are not disclosed in the embodiments of the computer-readable storage medium of the present disclosure, refer to the description of the method embodiments of the present disclosure.

The computer-readable storage medium may be an internal storage unit in the block compression apparatus or the computer device provided in any one of the foregoing embodiments, such as a hard drive or a memory of the computer device. The computer-readable storage medium may alternatively be an external storage device of the computer device, such as a removable hard drive, a smart media card (SMC), a secure digital (SD) card, or a flash card equipped on the computer device. Further, the computer-readable storage medium may alternatively include both an internal storage unit and an external storage device of the computer device. The computer-readable storage medium is configured to store the computer program and other programs and data that are required by the computer device. The computer-readable storage medium may further be configured to temporarily store data that has been outputted or data to be outputted.

Embodiments of the present disclosure further provide a computer program product or a computer program. The computer program product or the computer program includes computer instructions, and the computer instructions are stored in a computer-readable storage medium. A processor of a computer device reads the computer instructions from the computer-readable storage medium, and executes the computer instructions, to cause the computer device to perform the method in the foregoing embodiment corresponding to any one of FIG. 3 and FIG. 4.

The terms "first", "second", and the like in the description, the claims, and the drawings of the embodiments of the present disclosure are intended to distinguish between different objects, rather than describing a particular sequence. In addition, the terms "include" and any variation thereof are intended to cover a non-exclusive inclusion. For example, a process, method, apparatus, product, or device including a series of steps or units is not limited to the listed steps or modules, but instead, include steps or modules not listed in some embodiments, or include other steps or units inherent in the process, method, apparatus, product, or device in some embodiments.

In the embodiments of the present disclosure, the term "module" or "unit" refers to a computer program with a preset function or a part of the computer program, and operates, together with other related parts, to implement a preset target, and may be completely or partially implemented by using software, hardware (such as a processing circuit or a memory), or a combination thereof. Similarly, a single processor (or a plurality of processors or memories) may be configured to implement one or more modules or units. In addition, each module or unit may be a part of an overall module or unit including a function of the module or unit.

A person of ordinary skill in the art may be aware that units and algorithm steps of the examples described with reference to the embodiments disclosed herein may be implemented by using electronic hardware, computer software, or a combination thereof. To clearly describe the interchangeability between the hardware and the software, the foregoing has generally described compositions and steps of the examples based on network elements. Whether the network elements are implemented in the form of hardware or software depends on particular applications and design constraint conditions of the technical solutions. A person skilled in the art may use different methods to implement the described network elements for each particular application, but the implementation is not considered to depart from the scope of the present disclosure.

What is disclosed above is merely exemplary embodiments of the present disclosure and is not intended to limit the scope of the claims of the present disclosure. Therefore, equivalent variations made in accordance with the claims of the present disclosure fall within the scope of the present disclosure.

## Claims

1. A method for compressing data of a blockchain, executable by a blockchain node, the method comprising:
obtaining M pieces of transaction data, wherein each piece of transaction data comprises N attribute values of N transaction attributes, respectively, and M and N are both positive integers;
sorting, according to priorities of the N transaction attributes and the N attribute values of each piece of transaction data, the M pieces of transaction data into a transaction sequence;
generating N attribute-value sets, wherein each attribute-value set comprises the attribute values of a respective one of the N transaction attributes in the M pieces of transaction data, and an order of the attribute values of the respective transaction attribute in each attribute-value set is identical to an order of the attribute values of the respective transaction attribute in the transaction sequence;
performing differential encoding on the N attribute-value sets to obtain N attribute codes, respectively; and
encapsulating the N attribute codes into a block, wherein the block is uploaded to the blockchain when the block is finalized through consensus.

2. The method according to claim 1, wherein sorting, according to the priorities of the N transaction attributes and the N attribute values of each piece of transaction data, the M pieces of transaction data into the transaction sequence comprises iterations, each iteration comprising:
traversing the N transaction attributes to obtain a first transaction attribute, wherein the priority of the first transaction attribute obtained in said iteration is lower than the priority of the first transaction attribute obtained in an immediately previous iteration;
resorting a candidate sequence of the M pieces of transaction data according to the respective attribute value of the first transaction attribute in each piece of transaction data to obtain a resorted candidate sequence of the M pieces of transaction data, wherein the resorted candidate sequence obtained in the immediately previous iteration serves as the candidate sequence in said iteration when said iteration is not an earliest one of the iterations, and an original sequence of the M pieces of transaction data serves as the candidate sequence in said iteration when said iteration is the earliest one of the iterations;
entering a next iteration, when the respective attribute values of the first transaction attribute in the M pieces of transaction data comprise identical values; and
determining the resorted candidate sequence obtained in said iteration to serve as the transaction sequence without entering a next iteration, when the respective attribute values of the first transaction attribute in the M pieces of transaction data do not comprise identical values.

3. The method according to claim 2, wherein resorting the candidate sequence of the M pieces of transaction data according to the respective attribute value of the first transaction attribute in each piece of transaction data to obtain the resorted candidate sequence of the M pieces of transaction data comprises:
sorting the M attribute values of the first transaction attribute to obtain an attribute-value sequence;
determining target pieces of transaction data from the candidate sequence, wherein:
when said iteration is not the earliest one of the iterations, the target pieces of transaction data are pieces of transaction data identical in first attribute value and successive in the candidate sequence, wherein the first attribute value is the attribute value of the first transaction attribute obtained in the immediately previous iteration, and
when said iteration is the earliest one of the iterations, the target pieces of transaction data are the M pieces of transaction data; and
resorting, according to positions of second attribute values of the target pieces of transaction data in the attribute-value sequence, the target pieces of transaction data in the candidate sequence to obtain the resorted candidate sequence, wherein the second attribute value is the attribute value of the first transaction attribute obtained in said iteration.

4. The method according to claim 3, wherein sorting the M attribute values of the first transaction attribute to obtain an attribute-value sequence comprises:
grouping the M attribute values of the first transaction attribute into attribute-value groups and determining a quantity of attribute values in each attribute-value group, wherein each attribute-value group comprises the attribute values that are equal to a respective value;
wherein in the attribute-value sequence, the attribute values in each attribute-value group are successive, and the attribute-value groups are arranged in a descending order of the quantity of attribute values.

5. The method according to any one of claims 1 to 4, wherein the N attribute-value sets comprise a first attribute-value set, and performing the differential encoding on the N attribute-value sets to obtain N attribute codes, respectively, comprises:
writing a headmost attribute value in the first attribute-value set into a coding sequence and a calibration field that are configured for the first attribute-value set;
traversing the first attribute-value set according to the order of the attribute values in the first attribute-value set from a first attribute value through an M^{th} attribute value, wherein for each i ranging from 2 to M,
when the i^{th} attribute value is different from a current attribute value in the calibration field, the i^{th} attribute value is appended to a tail of the coding sequence, and then current attribute value in the calibration field is updated to be the i^{th} attribute value; and
when the i^{th} attribute value is identical to the current attribute value in the calibration field, a preset character is appended to the tail of the coding sequence; and
determining, after the first attribute-value set is traversed, the attribute code of the first attribute-value set according to the coding sequence of the first attribute-value set.

6. The method according to any one of claims 1 to 4, further comprising:
for each of the N transaction attributes,
obtaining a sliding window configured for said transaction attribute, wherein the sliding window covers L historical attribute values of said transaction attribute; and
determining, using the sliding window and the attribute values of said transaction attribute in the M pieces of transaction data, a distance standard deviation of the said transaction attribute; and
determining the respective priorities of the N transaction attributes according to the respective distance standard deviations of the N transaction attributes.

7. The method according to claim 6, wherein determining, using the sliding window and the attribute values of said transaction attribute in the M pieces of transaction data, the distance standard deviation of the said transaction attribute comprises:
arranging the attribute values of said transaction attribute in the M pieces of transaction data sequentially adjacent to the sliding window in a sliding direction of the sliding window;
sliding the sliding window along the sliding direction until L attribute values covered by the sliding window comprises the attribute values of said transaction attribute in the M pieces of transaction data; and
calculating, using the L attribute values, the distance standard deviation of said transaction attribute.

8. The method according to claim 7, wherein calculating, using the L attribute values, the distance standard deviation of said transaction attribute comprises:
generating a dataset for the L attribute values, wherein the dataset comprises P distinct values among the L attribute values and a respective occurrence count of each distinct value among the L attribute values; and
calculating, using L and the respective occurrence count of each distinct value, the distance standard deviation of said transaction attribute.

9. The method according to claim 8, wherein generating the dataset for the L attribute values comprises:
establishing an initial dataset;
traversing the L attribute values in an order from a first attribute value through a L^{th} attribute value, wherein for each q ranging from 1 to L:
when the initial dataset comprises a distinct value equal to the q^{th} attribute value, the occurrence count of the distinct value is increased by one; and
when the initial dataset does not comprise the distinct value equal to the q^{th} attribute value, the q^{th} attribute value is added into the initial dataset as a new distinct value, and the occurrence count of the new distinct value is set to equal to a preset value and added into the initial dataset; and
determining the initial dataset to serve as the dataset for the L attribute values, after the L attribute values are traversed.

10. The method according to claim 9, wherein calculating, using L and the respective occurrence count of each distinct value, the distance standard deviation of said transaction attribute comprises:
traversing to the P distinct values in the dataset in an order from a first distinct value to a P^{th} distinct values, wherein for each s ranging from 1 to P:
a difference between L and the occurrence count of the s^{th} distinct value is calculated as a value distance, and
a product of the value distance and the occurrence count of the s^{th} distinct value is calculated as an attribute distance of the s^{th} distinct value; and
calculating, after the P distinct values are traversed, a ratio of a sum of the P attribute distances to a square of L to obtain the distance standard deviation of said transaction attribute.

11. The method according to any one of claims 6 to 10, wherein determining, using the sliding window and the attribute values of said transaction attribute in the M pieces of transaction data, the distance standard deviation of the said transaction attribute comprises:
obtaining a historical distance standard deviation of said transaction attribute, wherein the historical distance standard deviation is calculated using the L historical attribute values in the sliding window;
arranging the attribute values of said transaction attribute in the M pieces of transaction data sequentially adjacent to the sliding window in a sliding direction of the sliding window;
sliding the sliding window in the sliding direction stepwise, wherein the sliding comprises an order of steps from a first step through an M^{th} step, and for each t ranging from 1 to M:
the t^{th} step of the sliding comprises discarding the attribute value located at a tail of the sliding window and adding a new attribute value to a head of the sliding window, the sliding direction points from the tail of the sliding window to the head of the sliding window, wherein the new attribute value is among the attribute values of said transaction attribute in the M pieces of transaction data;
determining, for each t ranging from 1 to M, an intermediate distance standard deviation for the t^{th} step of the sliding, wherein the intermediate distance standard deviation is determined to be equal to the historical distance standard when t is equal to 1, and the intermediate distance standard deviation is updated according to the discarded attribute value and the added attribute value when t is not equal to 1; and
determining the intermediate distance standard deviation for the M^{th} step to serve as distance standard deviation of the said transaction attribute.

12. The method according to claim 11, wherein updating the intermediate distance standard according to the discarded attribute value and the added attribute value comprises:
determining, after the t^{th} step of the sliding, an addition quantity and a removal quantity of the sliding window, wherein the addition quantity is a quantity of values equal to the added attribute value in the sliding window, and the removal quantity is a quantity of values equal to the discarded attribute in the sliding window;
subtracting a first difference from a second difference to obtain a delta attribute distance, wherein the first distance is equal to L minus the addition quantity, and the second distance is equal to L minus the removal quantity; and
calculating a sum of a ratio of the delta attribute distance to a square of L and the intermediate distance standard deviation for the (t-1)^{th} step of the sliding to obtain the intermediate distance standard deviation for the t^{th} step of the sliding.

13. An apparatus for compressing data of a blockchain, running on a blockchain node, the apparatus comprising:
an obtaining module, configured for obtaining M pieces of transaction data, wherein each piece of transaction data comprises N attribute values of N transaction attributes, respectively, and M and N are both positive integers;
a sorting module, configured for sorting, according to priorities of the N transaction attributes and the N attribute values of each piece of transaction data, the M pieces of transaction data into a transaction sequence;
a classifying module, configured for generating N attribute-value sets, wherein each attribute-value set comprises the attribute values of a respective one of the N transaction attributes in the M pieces of transaction data, and an order of the attribute values of the respective transaction attribute in each attribute-value set is identical to an order of the attribute values of the respective transaction attribute in the transaction sequence;
a coding module, configured for performing differential encoding on the N attribute-value sets to obtain N attribute codes, respectively; and
an encapsulating module, configured for encapsulating the N attribute codes into a block, wherein the block is uploaded to the blockchain when the block is finalized through consensus.

14. A computer device, comprising a processor, a memory, and a network interface,
the processor being connected to the memory and the network interface, the network interface being configured to provide a data communication function, the memory being configured to store program code, and the processor being configured to invoke the program code to perform the method according to any one of claims 1 to 12.

15. A computer-readable storage medium, storing a computer program, the computer program when loaded and executed by a processor implements the method according to any one of claims 1 to 12.

16. A computer program product, comprising a computer program or computer instructions, the computer program or computer the instructions when executed by a processor implements the method according to any one of claims 1 to 12.
